Europäisches Patentamt

European Patent Office

Office européen des brevets

(19)

(11) **EP 0 614 184 B1**

(12) **EUROPEAN PATENT SPECIFICATION**

(45) Date of publication and mention
of the grant of the patent:
**22.09.1999 Bulletin 1999/38**

(51) Int Cl.$^6$: **H04N 5/926**, H04N 5/922,
G11B 20/14, G11B 5/09,
H04L 27/34

(21) Application number: **94301411.8**

(22) Date of filing: **28.02.1994**

(54) **Digital recording and reproducing**

Digitale Aufzeichnung und Wiedergabe

Enregistrement et reproduction numériques

(84) Designated Contracting States:
**DE FR GB**

(30) Priority: **27.02.1993 KR 9303038**
        **18.08.1993 KR 9316068**

(43) Date of publication of application:
**07.09.1994 Bulletin 1994/36**

(73) Proprietor: **SAMSUNG ELECTRONICS CO., LTD.**
**Suwon-City, Kyungki-do (KR)**

(72) Inventors:
• **Park, Sam-yong**
  **Suwon-city, Kyungki-do (KR)**
• **Chang, Yong-deok**
  **Suwon-city, Kyungki-do (KR)**

(74) Representative: **Stanley, David William et al**
**APPLEYARD LEES**
**15 Clare Road**
**Halifax West Yorkshire HX1 2HY (GB)**

(56) References cited:
**EP-A- 0 335 346**          **US-A- 4 979 052**
**US-A- 5 095 392**          **US-A- 5 119 243**

## Description

The present invention relates to digital recording and reproducing, and is concerned particularly, although not exclusively, with digital signal magnetic recording and reproducing apparatus which can record and reproduce digital signals at high-density on a bandwidth-restricted channel in a digital video tape recorder or the like.

As analog signals and circuits are being progressively replaced by digital signals and circuits, due to the continuing development of the related technology, various kinds of digital recording and reproducing methods have been provided.

Although a digital signal magnetic recording and reproducing apparatus, which records and reproduces a digital image signal, is excellent in picture quality and dubbing performance in comparison with an analog magnetic recording and reproducing apparatus, which records and reproduces an analog image signal, the quantity of data to be recorded on a tape may be over ten times as large as that of an analog magnetic recording and reproducing apparatus, in recording the same image signal. In other words, by analog-to-digital conversion, the quantity of the signal data in a digital magnetic recording and reproducing apparatus is increased considerably. Accordingly, when a digital signal is recorded, the tape consumption is increased and it is difficult to record a great number of signals. Therefore, for the purpose of obtaining the same efficiency as that of an analog signal recording, it is necessary to increase recording efficiency by compressing data, modulating binary data to data of multiple-value level, recording the modulated data and improving bit error rate (BER) by increasing signal-to-noise ratio.

Because of the difficulty of recording and reproducing direct current components using a recording and modulating method applicable to a conventional digital magnetic recording and reproducing apparatus, base band modulating methods such as a non return to zero inverse modulation (NRZI), partial response(PR) modulation, eight-to-fourteen modulation (EFM), etc. have been employed Such base band modulating methods convert the zero-run length of data rows to be expressed in a binary code and record the concentrated signal frequency to attain a high-density recording. However, the base band modulation method, in which the signal level to be recorded has only two potential values, makes high-density recording difficult because of a low coefficient of utilization of recording frequency bands. Because of increased tape consumption, long-duration recordings are also difficult.

Therefore, as a channel coding technology suitable to a high-density recording is required, a modulation method which has been used in the communication field is changed and applied in a form suitable for recording and reproduction, thereby increasing a frequency utilization efficiency and accomplishing improvement of a recording bit rate without an increase in number of recording channels.

Accordingly, a code modulation method which is performed by combining multiple value modulations and shows a high coefficient of utilization of frequency bands by an error control coding applicable to a digital data transmission has been proposed. Such a code modulation method which reduces bit error rate without increasing bandwidth has been used greatly in the communication field.

Also, to realize a high-density recording, multiple value digital modulation methods such as quadrature amplitude modulation (QAM) and phase shift keying modulation (PSK), etc. used in the communication field have been introduced and, as a result, an increase of utilization efficiency of frequency bands has made high-density recording advantageous.

A digital signal magnetic recording and reproducing apparatus, which uses multiple valued QAM modulation and maximum likelihood decoding is disclosed in U.S. Pat. No. 5,095,392.

The digital signal magnetic recording and reproducing apparatus of US-A-5,095,392 performs a digital-to-analog conversion from the start, processes the converted signal, converts the processed signal into a multiple value signal at the time of encoding, records the converted multiple value signal, and decodes the signal by a maximum likelihood decoding after demodulating the signal recorded in an analog form and finally performs an analog-to-digital conversion.

US-A-4,979,052 (Matsushita) discloses a digital signal magnetic recording and reproducing apparatus which likewise performs a digital-to-analog conversion from the start and applies multi-value QAM and bias records the multi-value QAM signal to improve linearity and signal to noise ratio. US-A-5,119,243 (also Matsushita) further discloses using a carrier frequency and clock frequency having an integer multiple relation where the carrier and clock are reproduced using a phase lock loop PLL and the clock phase is shifted before use in decoding the demodulated signal to prevent degradation of error rate. Also, a clock phase reference signal is periodically inserted in the recording signal to improve accuracy of adjustment of the clock phase.

Preferred embodiments of the present invention aim to provide a digital signal magnetic recording and reproducing apparatus, which can improve recording efficiency by applying a multiple valued digital modulation method applicable to the communication field.

Another aim is to provide a digital signal magnetic recording and reproducing apparatus, which can record signals in high-density using quadrature amplitude and modulation phase shift keying modulation at the time of magnetically recording and reproducing a digital signal.

Still another aim is to provide a digital signal magnetic recording and reproducing apparatus, which processes an overall signal digitally by adopting a multiple value modulation method which possesses a low error rate and a high recording efficiency.

A further aim is to provide a digital signal magnetic recording and reproducing apparatus, which reduces a bit error rate by inserting a synchronizing signal to an input digital signal and reconstructing the synchronizing signal efficiently.

A still further aim is to provide a digital signal magnetic recording and reproducing apparatus, which modulates data by a carrier wave synchronized with data by generating the carrier wave using a system clock at the time of modulation and by generating a pilot signal for detecting the carrier wave synchronized at the time of demodulation.

According to one aspect of the present invention, there is provided a digital signal magnetic recording and reproducing apparatus which modulates a digital image input signal, records the modulated signal on a magnetic medium, reads the signal recorded thereon and demodulates it to the original signal, said apparatus characterised by :

coding means for converting an input digital image signal into a multiple valued digital signal;

modulating means for digitally quadrature-amplitude-modulating and phase-shift-keying-modulating said multiple valued digital signal according to a carrier signal;

pilot signal mixing means for generating a pilot signal and digitally mixing the pilot signal with said modulated signal;

recording controlling means for forming a magnetized signal suitable for recording on a magnetic recording medium from the modulated signal mixed with said pilot signal;

reproducing controlling means for outputting a digital signal of which the signal distortion and deterioration produced in a transmission system are corrected, from a magnetized signal reproduced from said magnetic recording medium;

carrier wave restoring means for generating a clock signal having the carrier signal frequency by detecting a pilot signal from said reproduced magnetized signal;

demodulating means for digitally demodulating the modulated signal output from said reproducing controlling means according to the carrier signal restored from said carrier wave restoring means; and

decoding means for outputting original digital data by Viterbi-decoding convolutionally coded data from the output of said demodulating means.

A digital signal magnetic recording and reproducing apparatus as above may further comprise noise eliminating means for restricting bands and decreasing clock frequencies to improve a signal-to-noise ratio of the output of said demodulating means.

Preferably, said modulating means comprises:

a first ROM in which a first carrier signal to be expressed in sine components is stored;

a second ROM in which a second carrier signal to be expressed in cosine components is stored;

a first multiplier for multiplying the first carrier signal output from said first ROM by the in-phase (I) channel data output from said coding means;

a second multiplier for multiplying the second carrier signal output from said second ROM by the quadrature-phase (Q) channel data output from said coding means; and

a first adder for adding the outputs of said first and second multipliers.

Preferably, said modulating means comprises:

first and second pulse shaping filters for wave-shaping and band-restricting of the I and Q channel data output from said coding means;

a first carrier signal generator having a first ROM wherein a first carrier signal to be expressed in sine components is stored and a second ROM wherein a second carrier signal to be expressed in cosine components is stored;

a first balanced-modulator having a first AND gate combination circuit for combining the I channel data output from said coding means with a first carrier signal output from said first ROM, a first adder combination circuit for adding the output of the first AND gate combination circuit and a first latch for temporarily storing the output of the first adder combination circuit;

a second balanced-modulator having a second AND gate combination circuit for combining the Q channel data output from said coding means with a second carrier signal output from said second ROM, a second adder combination circuit for adding the output of the second AND gate combination circuit and a second latch for temporarily storing the output of the second adder combination circuit; and

a first adder having a third adder combination circuit for adding the outputs of said first and second latches, that is, the modulated signal of the I channel and the modulated signal of the Q channel, and a third latch for temporarily storing the quadrature-amplitude-modulated signal which is the output of said third adder combination circuit.

Preferably, said pilot signal mixing means comprises:

a pilot signal generator for generating a pilot signal having a frequency equal to a predetermined number of times the frequency of the carrier signal; and

a second adder for adding the pilot signal to the modulated data of said modulating means.

Preferably, said recording controlling means comprises:

a digital-to-analog (D/A) converter for converting the output of said pilot signal mixing means to an analog signal;

a recording amplifier for amplifying the output of said D/A converter;

a bias signal generator for generating a bias signal; and

a third adder for adding the bias signal to the output of said recording amplifier.

Preferably, said recording controlling means comprises:

a digital-to-analog (D/A) converter for converting the output of said pilot signal mixing means into an analog signal;

a bias signal generator for generating a bias signal to use a linear portion of a magnetized characteristic curve considering non-linear characteristics of a magnetic channel; and

a third adder for adding the output of said D/A converter to the bias signal of said bias signal generator.

Preferably, said reproducing controlling means comprises:

a reproducing amplifier for amplifying a magnetized signal reproduced from said magnetic recording medium;

a phase shifter for shifting the phase of the output of said reproducing amplifier to compensate a phase shift by the differential characteristics of a magnetic channel at the time of recording;

a low-pass filter for filtering the reproduced signal from the output of said phase shifter;

an analog-to-digital (A/D) converter for converting the output of said low-pass filter into a digital signal form; and

a band-pass equalizer for receiving the output of said A/D converter and correcting signal distortion and deterioration produced in a transmission system.

Preferably, said reproducing controlling means comprises:

an analog-to-digital (A/D) converter for A/D converting the signal reproduced from said magnetic recording medium; and

a reproducing equalizer for correcting both phase and amplitude attenuation of a reproduced signal due to a differential magnetic channel characteristic.

Preferably, said carrier wave restoring means comprises:

a band-pass filter for detecting a pilot signal from an output of said reproducing controlling means; and

a phase locked loop (PLL) for generating a clock signal having a frequency corresponding to that of the carrier signal from the output of said band-pass filter.

Preferably, said demodulating means comprises:

a third ROM from which a first carrier signal to be expressed in sine components is read in accordance with a clock corresponding to said restored carrier signal;

a fourth ROM from which a second carrier signal to be expressed in cosine components is read in accordance with a clock corresponding to said restored carrier signal;

a third multiplier for multiplying the modulated signal output from said reproducing controlling means by the first carrier signal output from said third ROM;

a fourth multiplier for multiplying the modulated signal output from said reproducing controlling means by the second carrier signal output from said fourth ROM; and

a fourth adder for adding the outputs of said third and fourth multipliers.

Preferably, said demodulating means comprises:

a second carrier signal generator having a third ROM from which a first carrier signal to be expressed in sine components is read in accordance with a clock corresponding to said restored carrier signal and a fourth ROM from which a second carrier signal to be expressed in cosine components is read in accordance with a clock corresponding to said restored carrier signal;

a third balanced-modulator having a fourth AND gate combination circuit for combining the modulated signal output from said reproducing controlling means with the first carrier signal output from said third ROM, a fourth adder combination circuit for adding the output of the fourth AND gate combination circuit and a fourth latch for temporarily storing the output of the fourth adder combination circuit;

a fourth balanced-modulator having a fifth AND gate combination circuit for combining the modulated signal output from said reproducing controlling means with the second carrier signal output from said fourth ROM, a fifth adder combination circuit for adding the output of the fifth AND gate combination circuit and a fifth latch for temporarily storing the output of the fifth adder combination circuit; and

first and second matching filters for restricting the output bands of said third and fourth balanced-modulators.

Preferably, said noise eliminating means comprises:

first and second decimators for decreasing a clock frequency to improve a signal-to-noise (S/N) ratio of the output of the first and second matching filters;

first and second base-band equalizers for compensating the output signals of said first and second decimators; and

third and fourth decimators for redecimating the outputs of said first and second base-band equalizers to decrease the clock frequency.

Preferably, the digital signal magnetic recording and reproducing apparatus comprises :

digital-to-analog (D/A) converting means for converting the modulated signal with which said pilot signal is mixed into an analog signal;

bias signal generating means for generating a bias signal having a frequency more than a predetermined number of times the frequency of a carrier signal to be recorded using a linear portion on a magnetizing characteristic curve of a magnetic channel, combining the generated bias signal with the output of said D/A converting means and transmitting the result to said magnetic recording medium;

analog-to-digital (A/D) converting means for outputting an analog magnetized signal reproduced from said magnetic recording medium as a digital signal form after correcting the signal distortion and deterioration of the signal, produced in the transmission system;

Preferably, the digital signal magnetic recording and reproducing apparatus comprises:

synchronizing signal inserting means for inserting a synchronizing signal to input digital data supplied to said coding means and outputting a synchronizing flag signal;

synchronizing signal controlling means for controlling the coding of said coding means by receiving said synchronizing flag signal;

synchronizing flag detecting means for restoring a synchronizing flag signal from said demodulated signal output by said demodulating means; and

said decoding means for outputting original digital data by Viterbi-decoding convolutionally coded data from the output of said demodulating means in accordance with said synchronizing flag signal.

Preferably, said coding means comprises:

a buffer for temporarily storing part of the bits of data output from said synchronizing signal inserting means;

a convolution encoder in which a coding gain and a bit error rate are considered from the data output from said synchronizing signal inserting means; and

a mapper which sets the relationship between signal points through said convolution encoder so that a coding gain becomes large at the time of decoding.

Preferably, the digital signal magnetic recording and reproducing apparatus, further comprises a selecting means for selectively outputting some of the bits of the signals output from said synchronizing signal inserting means to said mapper and the rest of the bits to said convolution encoder so as to be parallel shifted.

Preferably, said mapper maps the synchronizing signal output from said synchronizing signal inserting means at the origin on a signal constellation diagram while said synchronizing flag signal is in "excited" level period.

Preferably, said mapper is constituted by ROMs, and in the signal constellation, a parallel shifted portion among signals of said convolution encoder is set-partitioned farthest and a signal shifted in the same state is set-partitioned far.

Preferably, said synchronizing signal controlling means comprises:

a frequency-divider for frequency-dividing a system clock by a predetermined number and inputting the frequency-divided clock as a clock signal of the mapper;

a first delay element for frequency-dividing the output of said frequency-divider again and outputting a clock signal of said selecting means;

a second delay element for outputting the clock signal of said convolution encoder by receiving the output of said frequency-divider as its input, and receiving said synchronizing flag signal as an enabling signal;

a third delay element for delaying said synchronizing flag signal by one clock portion; and

a logic element for logic multiplying said synchronizing flag signal by the output of said third delay element and outputting the result to an enabling terminal of said mapper.

Preferably, said synchronizing flag detecting means comprises:

comparing means for comparing the I and Q channel data output through said first and second low-pass equalizers with specific synchronization patterned data being predetermined synchronizing flag reference values;

detecting means for detecting specific data whereon a synchronizing signal is loaded and an adjacent predetermined number of data thereto from said compared values; and

counting means for counting the synchronizing flag signal for the period of the synchronizing flag signal, detecting the starting and ending points of excited states of the synchronizing flag signal and outputting the synchronizing flag signal.

Preferably, said decoding means comprises:

a branch evaluated value computing circuit for computing the evaluated values for the respective branches of the I and Q channel data demodulated from said first and second low-pass equalizers;

an adder/comparator/selector circuit for comparing the branch evaluated values in accordance with respective states on a Trellis diagram indicated in a time scale and selecting the least evaluated value;

a state memory for storing the output of said adder/comparator/selector circuit; and

a non-trace path memory for decoding information on survival paths according to respective states from said adder/comparator/selector circuit.

Preferably, said decoding means is controlled in accordance with the synchronizing flag signal detected from said synchronizing flag detecting means and decodes the original synchronizing data in the manner that the value of said non-trace path memory is not output while the synchronizing flag signal is at an "excited" level.
The invention extends to a video recorder and/or player provided with apparatus according to any of the preceding aspects of the invention.
Preferred embodiments of the present invention may have the following effects.
Frequency bands having a good carrier-to-noise ratio (CNR) in a magnetic recording and reproducing channel can be used by means of a multiple valued level modulation method. Also, a system can be realized easily by performing the modulation by generating a carrier wave signal (also called a carrier signal) synchronized with a system clock and performing the modulation digitally. Recording efficiency can be increased by extending frequency bands up to the permissible extent of CNR and BER of a reproduced signal.
Further, the detecting synchronizing data can be easily detected after demodulation, by inserting a synchronizing signal and mapping the value of the synchronizing signal at the origin on a signal constellation diagram in another embodiment of the present invention, and the error rate can be improved by using the detected synchronizing data at the time of decoding.
For a better understanding of the invention, and to show how embodiments of the same may be carried into effect, reference will now be made, by way of example, to the accompanying diagrammatic drawings, in which:

Figure 1 is a block diagram of one example of an embodiment of a digital signal magnetic recording and reproducing apparatus, according to the present invention;

Figure 2 is a view for explaining the concept of a modulator shown in Figure 1;

Figures 3A to 3D are operational timing charts of the modulator shown in Figure 2;

Figure 4 is a detailed block diagram of the modulator shown in Figure 2;

Figure 5 is a detailed circuit diagram of the modulator shown in Figure 4;

Figures 6A to 6C are views for explaining a carrier signal of sine components stored in a first ROM shown in Figure 5;

Figures 7A to 7C are views for explaining a carrier signal of cosine components stored in a second ROM shown in Figure 5;

Figure 8 is a view for explaining the concept of a demodulator shown in Figure 1;

Figure 9 is a detailed block diagram of the demodulator shown in Figure 8;

Figure 10 is a block diagram of another embodiment of a digital signal magnetic recording and reproducing apparatus, according to the present invention;

Figures 11A to 11F are operational timing charts of the digital signal magnetic recording and reproducing apparatus shown in Figure 10;

Figure 12 is a view for explaining the frequency characteristics of signals recorded in a magnetic recording medium by means of the apparatus shown in Figure 10;

Figure 13 is a detailed circuit diagram of a synchronizing signal controlling means shown in Figure 10;

Figures 14A to 14E are operational timing charts of the synchronizing signal controlling means shown in Figure 13;

Figure 15 is a detailed circuit diagram of a convolution encoder shown in Figure 10;

Figure 16 is a signal constellation diagram of a mapper shown in Figure 10;

Figure 17 is a state diagram of the mapper shown in Figure 10;

Figure 18 is a configurational diagram of a non-linear mapper shown in Figure 10 at the time of a ROM embodiment; and

Figure 19 is a detailed circuit diagram of a synchronizing flag detecting means shown in Figure 10.

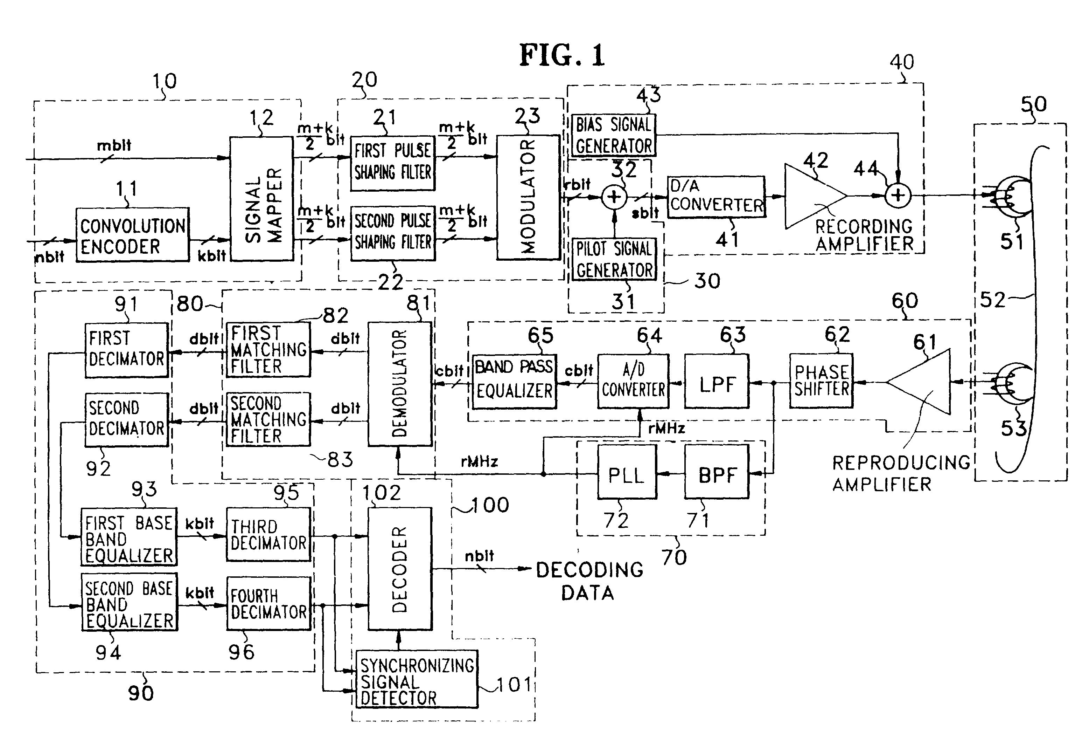

The digital signal magnetic recording and reproducing apparatus according to the embodiment of Figure 1 comprises:

a coding portion 10 having a convolution encoder 11 for convolutionally coding digital input data bits and a signal mapper 12 for parallel processing outputs of the convolution encoder 11 simultaneously by the number of the necessary bits;

a modulating portion 20 having first and second pulse shaping filters 21 and 22 for band-restricting the output of the signal mapper 12 and a modulator 23 for modulating the outputs of the first and second pulse shaping filters 21 and 22;

a pilot signal mixer 30 having a pilot signal generator 31 for generating a pilot signal and a second adder 32 for adding the pilot signal to the data modulated from the modulator 23;

a recording controller 40 having a digital-to-analog (D/A) converter 41 for converting the output of the second adder 32 into an analog signal, a recording amplifier 42 for amplifying the output of the D/A converter 41, a bias signal generator 43 for generating a bias signal and a third adder 44 for adding the bias signal to the output of the recording amplifier 42;

a magnetic recording and reproducing portion 50 having a recording head 51 for recording the output of the third adder 44 on a magnetic recording medium 52 as a magnetized signal and a reproducing head 53 for reproducing the magnetized signal recorded on the magnetic recording medium 52;

a reproducing controller 60 having a reproducing amplifier 61 for amplifying the signal reproduced by the reproducing head 53, a phase shifter 62 for shifting the phase of the output of the reproducing amplifier 61, a low pass filter 63 for detecting a reproduced signal which is quadrature amplitude-modulated from the output of the phase shifter 62, an analog-to-digital (A/D) converter 64 for converting the output of the low-pass filter 63 into a digital signal form and a band-pass equalizer 65 for equalizing the output of the A/D converter 64;

a carrier wave restoring means 70 having a band-pass filter 71 for detecting the pilot signal from the output of the phase shifter 62 and a phase locked loop (PLL) 72 for detecting a clock signal having the same frequency as that of the carrier signal from the outputs of band-pass filter 71;

a demodulating portion 80 having a demodulator 81 for demodulating the output of the band-pass equalizer 65 and first and second matching filters 82 and 83 for restricting the output bands of the demodulator 81;

a noise eliminator 90 having first and second decimators 91 and 92 for decimating the outputs of the first and second matching filter 82 and 83 for improving a signal-to-noise (S/N) ratio, first and second base-band equalizers 93 and 94 for equalizing the outputs of the first and second decimators 91 and 92 and third and fourth decimators 95 and 96 for redecimating the outputs of the first and second base-band equalizers 93 and 94; and

a decoding portion 100 having a synchronizing signal detector 101 for detecting a synchronizing signal from the outputs of the third and fourth decimators 95 and 96 and a decoder 102 for decoding the outputs of the third and fourth decimators 95 and 96 in accordance with the detected synchronizing signal.

The operation of the digital signal magnetic recording and reproducing apparatus shown in Figure 1 will now be described.

According to Figure 1, the input data bits are output as k bits through the convolution encoder 11, with m bits not coded and n bits coded at a ratio of n/k.

A convolution code is a non-block signal, which causes previous data to influence subsequent data and has an excellent capability of correcting burst errors. However, use of the convolution encoder 11 together with a signal mapper 12 is like block coding.

Here, conventionally, the coding portion and the modulating portion have been treated separately, but the present embodiment of the invention uses the serially linked convolution encoder and modulator as in Ungerboeck's Trellis Coded Modulation (TCM).

The Ungerboeck's channel coding method enhances a coding gain by reducing the detecting error of a Viterbi decoder at the time of coding and by maximizing the Euclidean distance between signals.

In other words, to avoid a conventional method of performing coding and modulation separately, as in the Ungerboeck's channel coding method, there is a convolution coding so as to have a maximum Euclidean distance on a phase diagram of a modulated signal by creating a mutually organic relationship between coding and modulation. Therefore, k bits output from the convolution encoder 11 are coded at a maximum Euclidean distance among the codes, thereby minimizing detection error at the time of decoding.

If the coded k bits and non-coded m bits are input to the signal mapper 12, they are changed into m+k bits suitable to be modulated, separated into (m+k)/2 and finally input to the in-phase (I) and quadrature-phase (Q) channels of first and second pulse shaping filters 21 and 22, respectively. Here, many more bits than m+k bits can be given by additional bits.

The first and second pulse shaping filters 21 and 22 are constituted by low-pass filters and perform band restriction and wave shaping to eliminate inter-symbol interference (ISI).

In other words, the signal, quadrature-amplitude-modulated and phase-shift-keying-modulated by the modulator 23, is output as r bits after passing through first and second pulse shaping filters 21 and 22, which are band-restricted within base bands in order to prevent internal modulation.

The pilot signal generator 31 generates a pilot signal having a frequency of 2fc which is double the frequency of a carrier wave (fc) for the restoration of a carrier wave and outputs it to a first input terminal of the second adder 32. The second adder 32 adds the pilot signal to the r-bit modulated signal and outputs an s-bit signal.

The D/A converter 41 converts the output of the second adder 32 into an analog signal and amplifies it in the recording amplifier 42.

The bias signal $f_B$ generated in the bias signal generator 43 is recorded in a recording signal band so as to have the following relationship with a maximum frequency $f_H$, as described in equation (1).

$$f_B \geq 3f_H \tag{1}$$

The third adder 44 adds the output signal of the recording amplifier 42 to the bias signal to record the added signal on the magnetic recording medium 52 as a magnetized signal by means of recording head 51. The bias signal is a signal for correcting a hysteresis characteristic of the magnetized signal.

The demodulating process is processed in the inverse sequence of the above described modulation process.

After a modulated signal recorded on the magnetic recording medium 52 is reproduced by reproducing head 53, the reproduced signal is amplified in reproducing amplifier 61.

The phase shifter 62 shifts the phase of the signal reproduced from the reproducing amplifier 61 by 90° to compensate the 90° phase shift which is due to the differential characteristic of a magnetic channel at the time of recording.

The low-pass filter 63 detects a base band wherein a modulated signal is loaded, from the output of the phase shifter 62.

A/D converter 64 converts the output of the low-pass filter 63 into a c-bit digital signal form and inputs it to demodulator 81 through band-pass equalizer 65.

The band-pass equalizer 65 corrects the signal distortion and the signal deterioration which are generated in the transmission system.

Meanwhile, band-pass filter 71 detects a band wherein a pilot signal is loaded among the signal amplified from the reproducing amplifier 61.

The phase locked loop (PLL) 72 detects an r MHz modulation clock signal (a carrier wave) from the output of the band pass filter 71 and inputs it to the demodulator 81.

The demodulator 81 receives, as its input, the output of the band-pass equalizer 65 and the output clock of the PLL 72, generates first and second carrier signals and outputs I and Q channel data by balance-modulating the carrier signals.

Therefore, the demodulator 81 outputs the demodulated signals of two channels having d bits by forming convolutionally coded data.

First and second matching filters 82 and 83 restrict the output bands of the demodulator 81. The matching filters are devices for prohibiting the modulation from being involved in the inter-symbol interference in accordance with the characteristics of first and second pulse shaping filters 21 and 22 at the time of modulation. The inter-symbol interference is generated from a reproduced signal by a frequency characteristic of magnetic recording and reproducing portion 50.

Therefore, the convolutionally coded data of the demodulator 81 are band-restricted through first and second matching filters 82 and 83, thereby eliminating noise and improving the S/N ratio.

First and second decimators 91 and 92 decimate the outputs of first and second matching filters 82 and 83. Band restriction and clock frequency reduction occurs by first and second matching filters 82 and 83 and first and second decimators 91 and 92, respectively.

First and second base band equalizers 93 and 94 equalize two signals of I and Q channels of first and second decimators 91 and 92.

Third and fourth decimators 95 and 96 redecimate the outputs of first and second base band equalizers 93 and 94 and output them to synchronizing signal detector 101 and decoder 102.

Signal addition and clock frequency reduction occurs by first and second base band equalizers 93 and 94 and third and fourth decimators 95 and 96, respectively.

Here, the reason why the decimation is performed twice is to seek system stability by lowering the clock frequency.

Synchronizing signal detector 101 detects the synchronizing signal from the outputs of third and fourth decimators 95 and 96 and outputs it to the decoder 102.

The decoder 102 decodes the demodulated signal of I and Q channels in accordance with the synchronizing signal. Here, a Viterbi decoder is employed as the decoder.

In other words, the decoder 102 performs decoding by selecting the path of which the Hamming distance with the received data series is shortest by a maximum likelihood decoding (MLD).

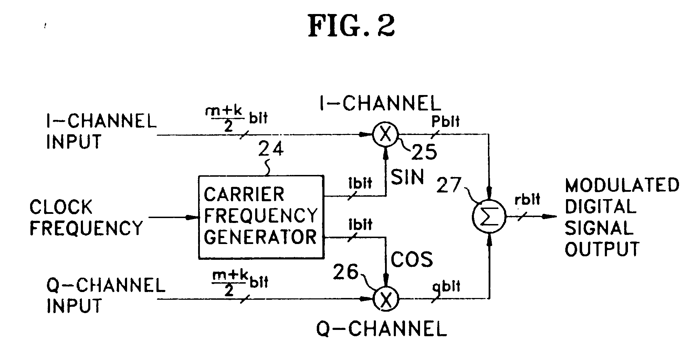

Figure 2 is a view for explaining the concept of the modulator shown in Figure 1.

Referring to Figure 2, if data is input separately to I and Q channels, first and second carrier signals (the respective signals having a 90° phase difference) are multiplied by the data and two signals are added, then, a quadrature amplitude- and phase-shift-keying-modulated signal is output.

Conventionally, such a signal processing as stated above is processed analogically, but in the present embodiment of the invention, signal processing is performed digitally, thereby improving signal distortion due to noise and environmental conditions.

In other words, the modulator 23 shown in Figure 1 is a quadrature amplitude modulator (QAM).

The modulator 23 generates a carrier signal in a first carrier frequency generator 24 in accordance with a system clock frequency, as shown in Figure 2.

The first carrier signal $C_1(t)$ which can be expressed in the following equation (2) generates an i-bit signal and outputs it to a first balanced-modulator 25.

$$C_1(t) = A \cdot SIN\omega c \cdot t \tag{2}$$

The first balanced-modulator 25 balance-modulates a (m+k)/2 bit signal output to I channel from the first pulse shaping filter 21 and a first carrier signal and outputs a p-bit signal to a first input terminal of the first adder 27.

Meanwhile, a second carrier signal $C_2(t)$ having a phase difference of ±90° from that of first carrier signal $C_1(t) = A \cdot SIN\omega c \cdot t$, which is generated from the carrier frequency generator 24, can be expressed in the following equation (3) and a second balanced modulator 26 balance-modulates a second carrier signal and a (m+k)/2 bit signal which is output to Q channel from the second pulse shaping filter 22 and outputs a q-bit signal to a second input terminal of the first adder 27.

$$C_2(t) = A \cdot COS\omega c \cdot t \tag{3}$$

Assuming that the output of the first adder 27 is S(t), S(t) can be expressed in the following equation (4) and is output to a second input terminal of the second adder 32 as an r-bit signal.

$$S(t) = (m+k)/2 \cdot A \cdot COS\omega c \cdot t + (m+k)/2 \cdot A \cdot SIN\omega c \cdot t \tag{4}$$

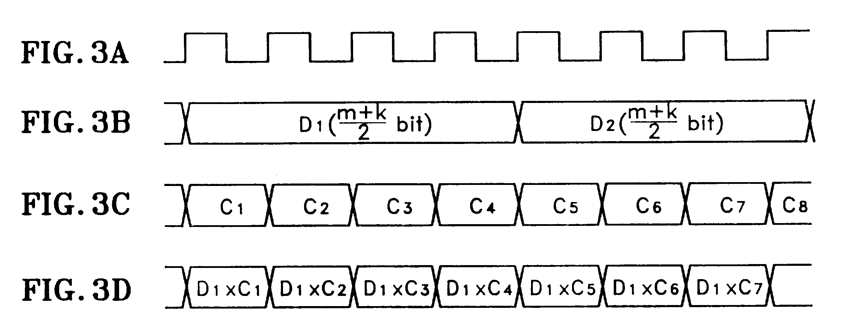

Figure 3A shows a modulating clock used for modulation, Figure 3B shows a parallel input of (m+k)/2 bit of I channel, Figure 3C shows a first carrier signal which is parallel input as i bits and Figure 3D shows quadrature-amplitude-modulated data which are the output of the first adder 27.

Although only modulated signals of I channel are taken as examples in Figures 3A to 3D, it should be noted that such modulations are performed in I and Q channels at the same time.

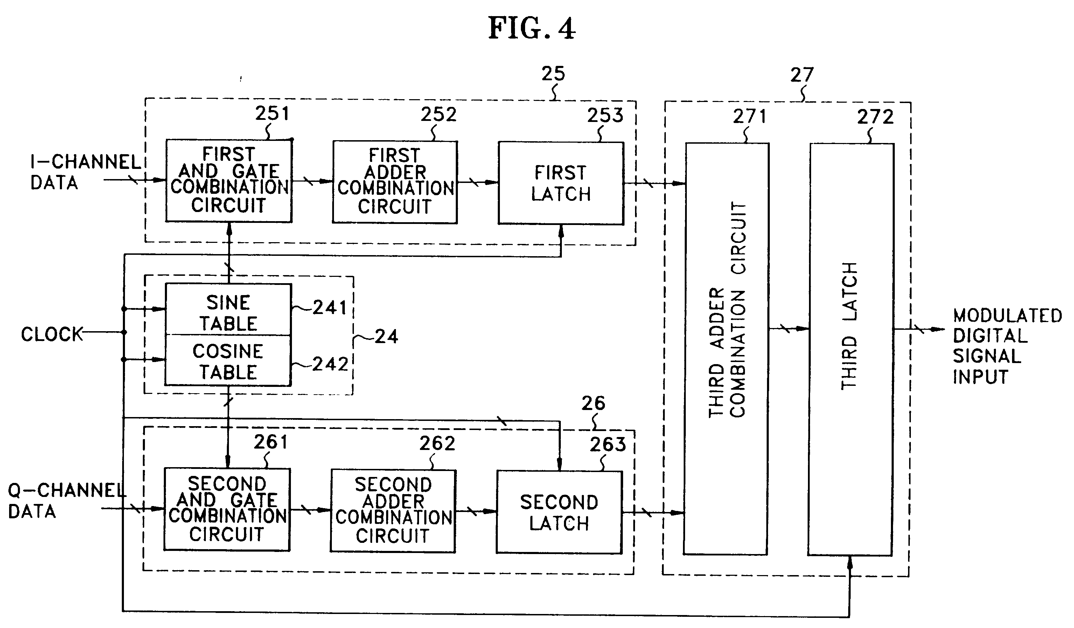

Figure 4 is a block diagram of the modulator shown in Figure 2. A characteristic of the modulator according to this embodiment of the invention is that the modulated signal processing steps process digital signals from input to output.

The modulator shown in Figure 4 comprises:

the first carrier signal generator 24 having a first ROM 241 wherein a first carrier signal which can be expressed in such sine components as the equation (2) is stored and a second ROM 242 wherein a second carrier signal which can be expressed in such cosine components as the equation (3) is stored;

the first balanced-modulator 25 having a first AND gate combination circuit 251 for combining the I channel data output from the first pulse shaping filter 22 and a first carrier signal output from the first ROM 241, a first adder combination circuit 252 for adding the output of the first AND gate combination circuit 251 and a first latch 253 for temporarily storing the output of the first adder combination circuit 252;

the second balanced-modulator 26 having a second AND gate combination circuit 261 for combining the Q channel data output from the second pulse shaping filter 23 and a second carrier signal output from the second ROM 242, a second adder combination circuit 262 for adding the outputs of the second AND gate combination circuit 261 and a second latch 263 for temporarily storing the output of the second adder combination circuit 262; and

the first adder 27 having a third adder combination circuit 271 for adding the outputs of the first and second latches 253 and 263, that is, the p-bit modulated signal of the I channel to the q-bit modulated signal of the Q channel and a third latch 272 for temporarily storing the output of the third adder combination circuit 271, that is, the r-bit quadrature-amplitude-modulated signal.

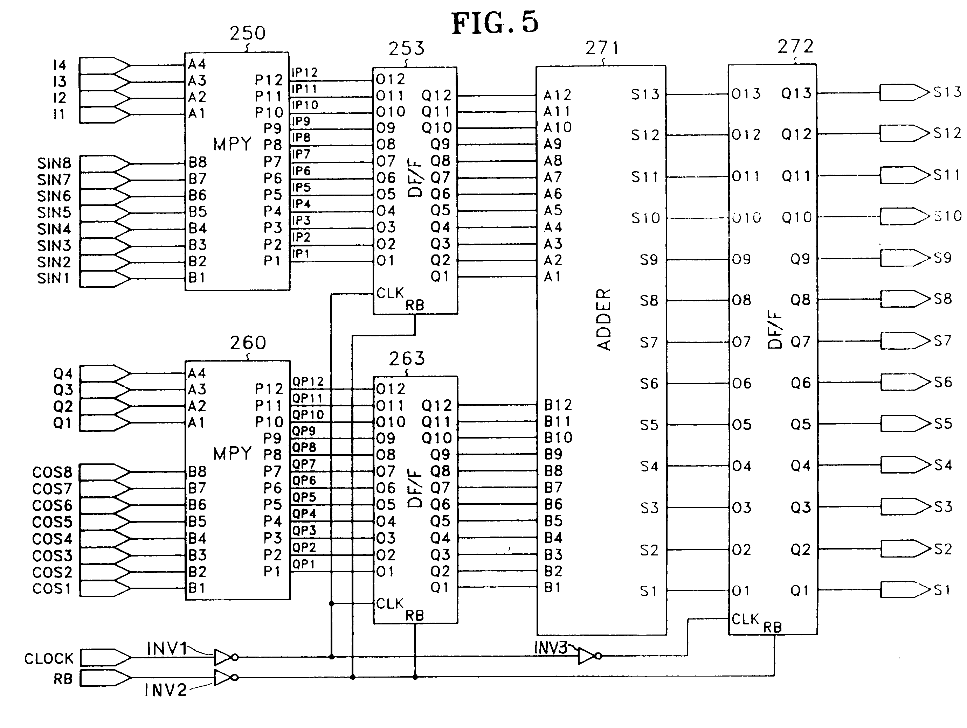

Figure 5 is a detailed circuit diagram of the modulator shown in Figure 4.

Referring to Figure 5, a first multiplier 250 corresponds to the first AND gate combination circuit 251 and first adder combination circuit 252 shown in Figure 4 and a second multiplier 260 corresponds to the second AND gate combination circuit 261 and second adder combination circuit 262, first to third latches 253, 263 and 272 are constituted by D flip-flops and a third adder combination circuit 271 corresponds to an adder.

Now, the operation of the modulator of Figure 4 will be explained in connection with Figures 5 to 7C.

Referring to Figure 4, if the input digital data is separated into I and Q channels respectively, and input to first and second AND gate combination circuits 251 and 261, the digital data (the first carrier signal) of the sine components from first ROM 241 and the I channel data are multiplied in the first AND gate combination circuit 251 and first adder combination circuit 252 and are then latched to first latch 253.

The digital data (the second carrier signal) of cosine components from second ROM 242 and the Q channel data are multiplied in second AND gate combination circuit 261 and second adder combination circuit 262 and are then latched to second latch 263.

The third adder combination circuit 271 combines the I and Q signals and generates a quadrature-amplitude-modulated signal through the third latch 272. The input data Di and carrier Ci are multiplied to generate an output Mi. Here, a reference letter i denotes integers from numeral 1 through n.

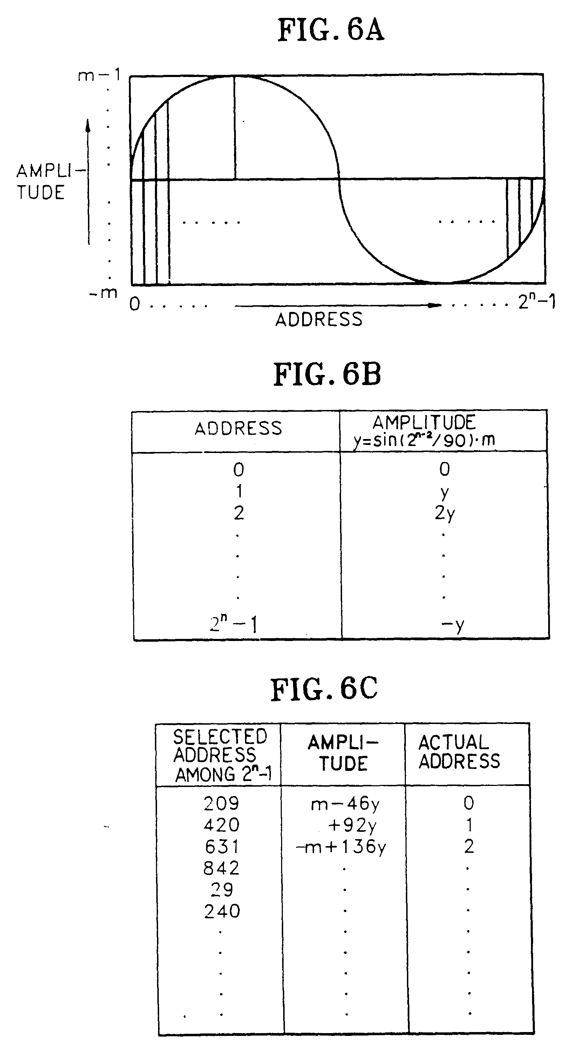

Here, composition examples of the carrier frequencies indicating a digital composition method are shown in Figures 6A to 7C.

For example, Figure 6A shows the waveform of a carrier of frequency 5.332 MHz. In Figure 6A which illustrates a wavelength of first carrier signal C1(t) having K MHz frequency, the abscissa indicates address numbers 0 to $2^n-1$ and the ordinate indicates quantizing levels with respect to amplitudes.

If address and amplitude are quantized into 10 bits and 4 bits, respectively, a table as shown in Figure 6B is obtained. Figure 6B explains the relationship between addresses and amplitudes, which is expressed in an equation, $y = \sin(2^{n-2}/90) \cdot m$. Here, y indicates an equidistance of amplitudes.

Here, if the table is read by a clock of 26 MHz, only about 4.876 data values are read.

The relationship is indicated as follows: 26 MHz/5.332 MHz = 4.876

The result is as follows.

1024/4.876 = 210. That is, 1024 addresses are continuously read at an interval of 210 addresses. If such operations are repeated, the same value as that of the initially read address is read again at the 513th operation. Then, the remaining 512 values are discarded and only the repetitive 512 values are taken to form the table using a ROM, which is first ROM 241.

Figure 6C indicates such a table formed by the above relationship. As indicated in the table, whenever a clock signal is received, sequentially repetitive signals are read from the actual addresses 0 through 511.

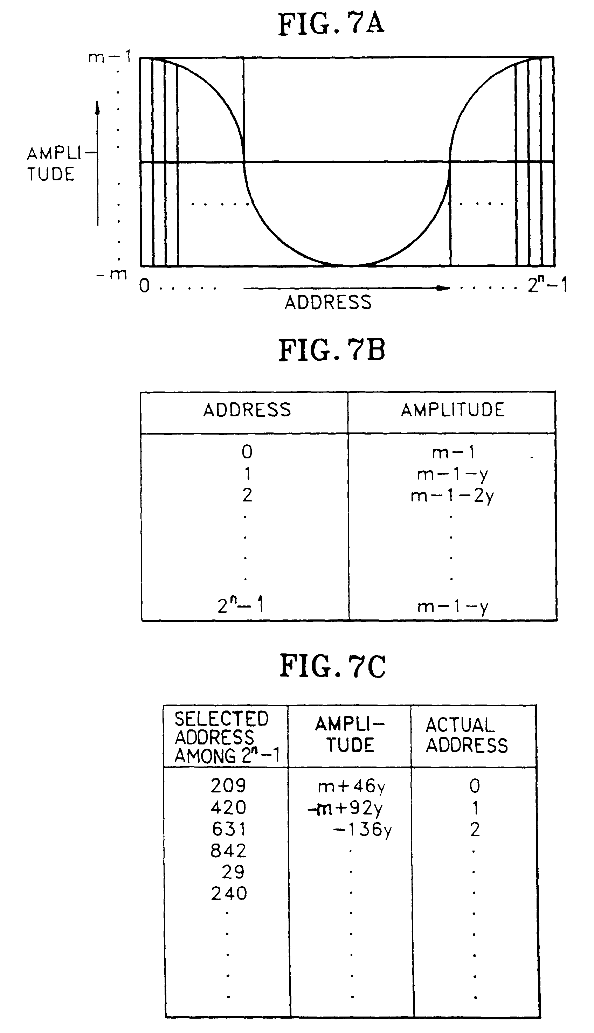

Figure 7A illustrates a wavelength of second carrier signal C2(t) having K Mhz frequency, where the abscissa indicates address numbers 0 to $2^n-1$ and the ordinate indicates quantizing levels with respect to amplitudes.

Figure 7B shows a relationship between address and amplitude and y indicates a given variation of the amplitude as every address is increased by one.

As indicated in the table shown in Figure 7C by such a relationship, whenever a clock signal is received, sequentially repetitive signals are read from the actual addresses 0 through 511 and the value stored in the address becomes a second carrier signal of the cosine components, which is stored in second ROM 242.

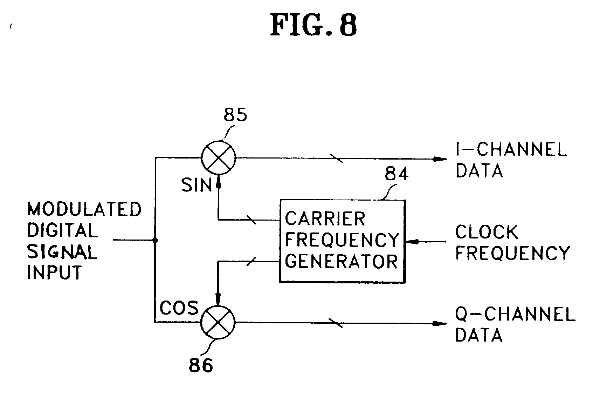

Figure 8 is a drawing for explaining the concept of the demodulator 81 shown in Figure 1, and the operation thereof is performed in the inverse order to that of modulation.

Referring to Figure 8, the input modulated signal is input to a first input of third and fourth balanced-modulators 85 and 86.

First and second carrier signals which are generated from a second carrier frequency generator 84 by a clock frequency having the input frequency of $f_c$ are input to a second input of third and fourth balanced-modulators 85 and 86, respectively.

The second carrier signal to be expressed in cosine components input to the fourth balanced-modulator 86 is a signal phase-shifted by 90°, compared with the first carrier signal which can be expressed in sine components. The modulated input signals are balance-modulated in the third and fourth balanced-modulators 85 and 86, respectively, by two carrier signals.

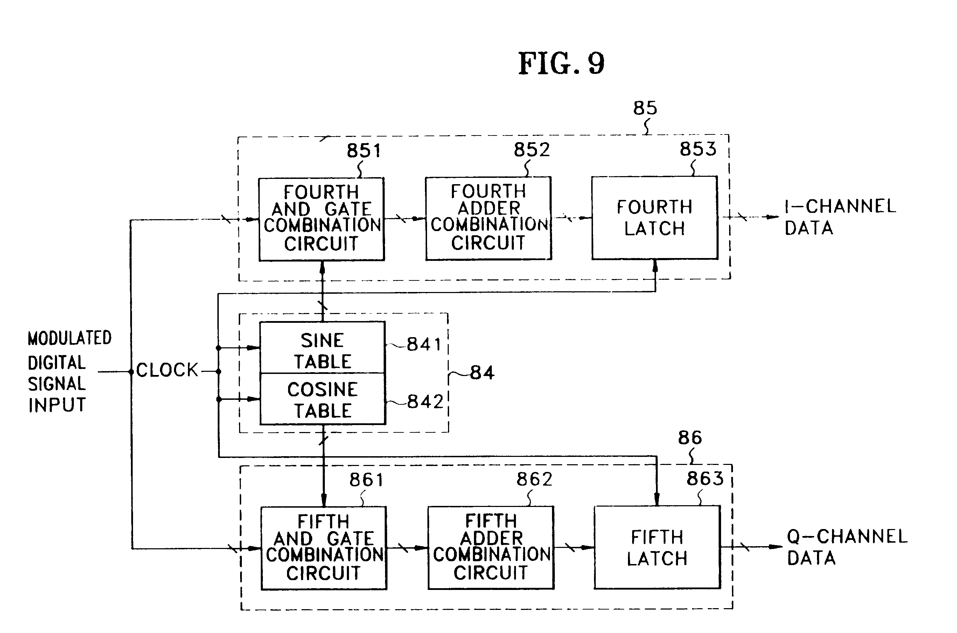

Figure 9 is a detailed block diagram of an example of the demodulator shown in Figure 8.

Referring to Figure 9, the second carrier frequency generator 84 corresponds to a third ROM 841 wherein a first carrier signal to be expressed in sine components is stored and a fourth ROM 842 wherein a second carrier signal to be expressed in cosine components is stored. The signals stored in these ROMs are the same as those stored in first and second ROMs 241 and 242, as described above in connection with Figures 6A to 7C.

The third balanced-modulator 85 corresponds to a fourth AND gate combination circuit 851 for combining the modulated signal output from band-pass equalizer 65 and the first carrier signal output from the third ROM 841, a fourth adder combination circuit 842 for adding the output of the fourth AND gate combination circuit 851 and a fourth latch 853 for temporarily storing the output of the fourth adder combination circuit 852. The fourth AND gate combination circuit 851 and fourth adder combination circuit 852 are constituted by multipliers.

The fourth balanced-modulator 86 corresponds to a fifth AND gate combination circuit 861 for combining the modulated signal output from band-pass equalizer 65 and the second carrier signal output from the fourth ROM 842, a fifth adder combination circuit 862 for adding the output of the fifth AND gate combination circuit 861 and a fifth latch 863 for temporarily storing the output of the fifth adder combination circuit 862. The fifth AND gate combination circuit 861 and a fifth adder combination circuit 862 are constituted by multipliers.

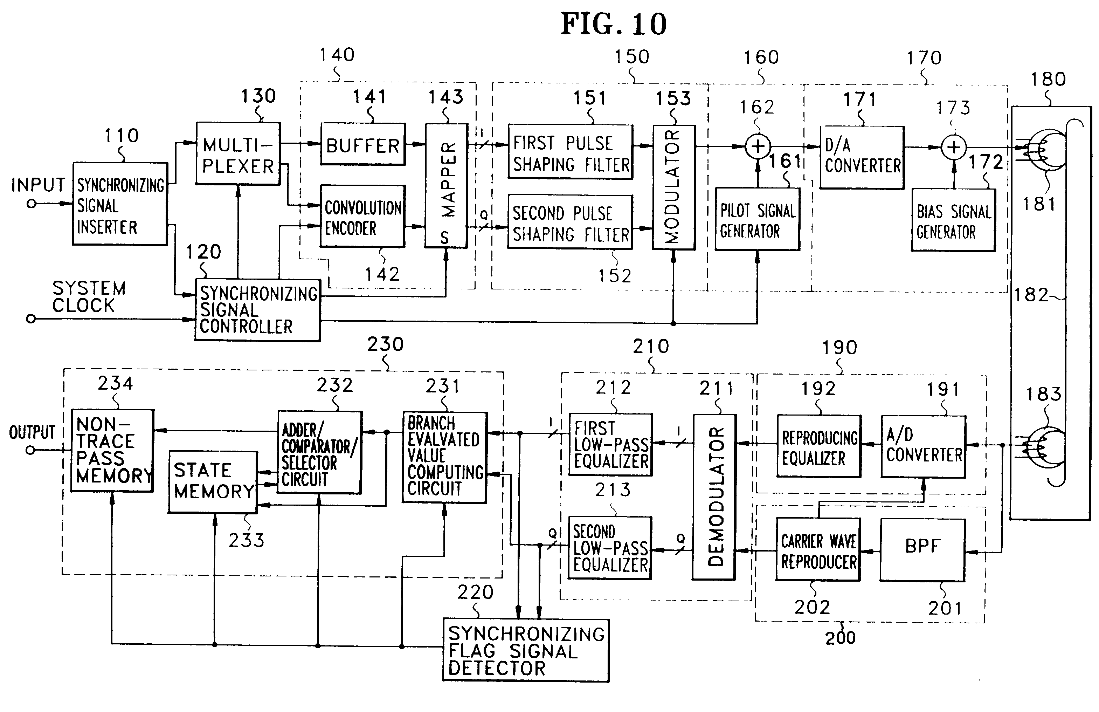

Figure 10 is a block diagram of the digital signal magnetic recording and reproducing apparatus according to another embodiment of the present invention, which comprises:

a synchronizing signal inserter 110 for inserting a synchronizing signal to input digital data;

a synchronizing signal controller 120 for synchronizing the overall system;

a multiplexer 130 for selectively outputting the output of the synchronizing signal inserter 110 in accordance with a synchronizing flag signal output from the synchronizing signal controller 120;

a coding portion 140 having a buffer 141 for temporarily storing a part of the bits which are parallel transferred among data output from the multiplexer 130, a convolution encoder 142 for coding data of the rest of the bits among data output from the multiplexer 130 considering a coding gain and a bit error rate and a mapper 143 for setting the relationship between signal points through the convolution encoder 142 so that a coding gain becomes large at the time of decoding;

a modulating portion 150 having first and second pulse shaping filters 151 and 152 for restricting base bandwidths of the I and Q channel data output from the mapper 143 and removing inter-symbol interference and a modulator 153 for generating a carrier wave using a ROM table and for quadrature-amplitude-modulating andphase-shift-keying-modulating the output of two channels of the mapper 143 using the carrier wave;

a pilot signal mixer 160 having a pilot signal generator 161 for facilitating demodulation in synchronization with a carrier frequency and a first adder 162 for adding the pilot signal to the modulated data of the modulator 153;

a recording controller 170 having a digital-to-analog (D/A) converter 171 for converting the output of the first adder 162 to an analog signal, a bias signal generator 172 for utilizing a linear component of a magnetization characteristic curve considering non-linear characteristics of magnetic channels and a second adder 173 for adding a bias signal of the bias signal generator 172 to the output of the D/A converter 171;

a magnetic recording and reproducing portion 180 having a recording head 181 for recording the output of the second adder 173 on a magnetic recording medium 182 as a magnetized signal and a reproducing head 183 for reproducing the magnetized signal recorded on the magnetic recording medium 182;

a reproducing controller 190 having an analog-to-digital (A/D) converter 191 for A/D converting a signal reproduced by the reproducing head 183 and a reproducing equalizer 192 for correcting both phase, by the differential characteristics of the magnetic channels for the reproduced signal, and signal amplitude attenuation;

a carrier wave restoring portion 200 having a band- pass filter 201 for detecting frequency bands wherein a pilot signal is loaded from the signal reproduced from the reproducing head 183 and a carrier wave reproducer 202 composed of a PLL for detecting a clock signal having the same frequency as that of the carrier signal from the output of the band-pass filter 201;

a demodulating portion 210 having a demodulator 211 for demodulating the modulated signal to the I and Q channel data using the reproduced carrier wave and first and second low-pass equalizers 212 and 213 for amplitude- and phase-correcting the output of the demodulator 211;

a synchronizing flag signal detector 220 for restoring a synchronizing flag signal from the signal demodulated from the first and second low-pass equalizers 212 and 213; and

a Viterbi decoder 230 having a branch evaluated value computing circuit 231 for computing the evaluated amount for the respective branches of the I and Q channel data demodulated from the first and second low pass equalizer 212 and 213, an adder/comparator/selector circuit 232 for comparing the evaluated branch values according to respective states of a Trellis diagram indicated in a time scale and selecting the least value of the evaluated value, a state memory 233 for storing the output of the adder/comparator/selector circuit 232 and a non-trace pass memory 234 for decoding the information on the survival paths in accordance with the respective states.

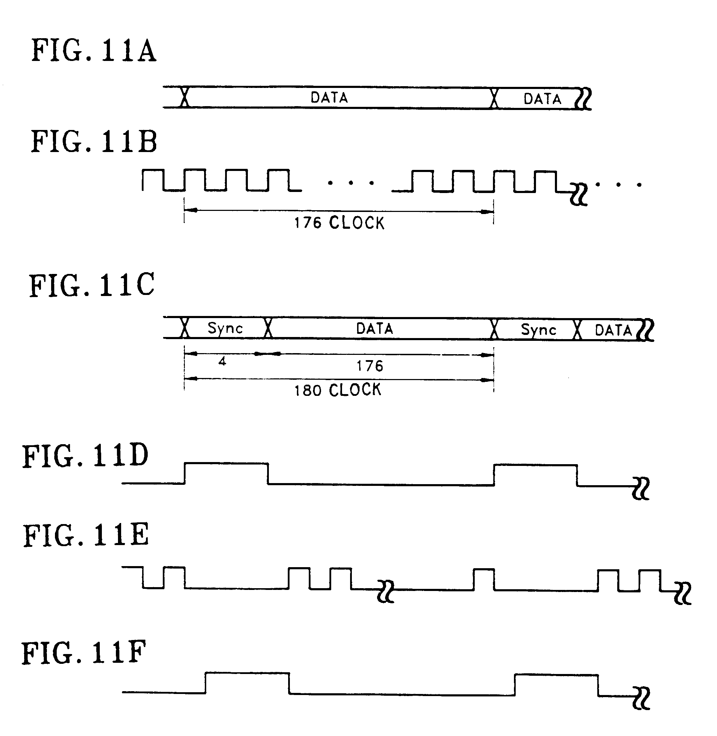

Now, the operation of the digital signal magnetic recording and reproducing apparatus shown in Figure 10 will be explained with reference to Figures 11A to 11F.

If such m-bit digital data as shown in Figure 11A is input to synchronizing signal inserter 110, a synchronizing signal is inserted to the digital data in accordance with the system clock shown in Figure 11B and then output as a signal form shown in Figure 11C to be input to multiplexer 130.

The signal (Figure 11C) to which a synchronizing signal is added by means of the synchronizing signal inserter 110 is output as n bits through the multiplexer 130. Among the output bits, (n-2) bits are parallel shifted to be input to buffer 141 and the other two bits are input to convolution encoder 142.

A synchronizing flag signal output from the synchronizing signal inserter 110, as shown in Figure 11D, is synchronized to the system clock shown in Figure 11B to be input to synchronizing signal controller 120 which is a system synchronization circuit.

The synchronizing signal controller 120 outputs a clock signal which is "low" during an interval where a synchronizing signal is loaded and which is "normal" during a valid data interval, to the convolution encoder 142, as shown in Figure 11E.

The data output through the multiplexer 130 are input to the mapper 143 through a convolution encoder 142 while the synchronizing flag signal shown in Figure 11F is "low (0)" and the convolution encoder 142 does not operate while the synchronizing flag signal is "high (1)." If the synchronizing flag signal of "high (1)" state is input to the terminal S of the mapper 143, the synchronizing signal is mapped at the origin of a signal constellation diagram.

The signals separated into the I and Q channels through the mapper 143 are input to modulator 153 through first and second pulse shaping filters 151 and 152 which do not have inter-symbol interference (ISI) and restrict bands suitably to the bandwidth of the magnetic channels.

Here, the structure and operation of the modulator 153 are the same as those of the modulator as already explained in Figures 2 to 7.

The signal input to the modulator 153 is balance-modulated with the carrier wave signal synchronized with the system clock (Figure 11B) and the output of the modulator 153 is then added to the pilot signal of which the frequency is double that of a carrier wave, which is generated in the pilot signal generator 161, in first adder 162.

The pilot signal generator 161 is a circuit necessary for demodulating the signal by reproducing the pilot signal and synchronizing the reproduced signal through the synchronized carrier wave generator 202 when a signal is demodulated. The carrier wave generator 202 is composed of a phase locked loop (PLL).

The modulated signal to which the pilot signal is added, is converted to an analog signal through D/A converter 171, generates the bias signal having the frequency three times more than that of the modulated signal in the bias signal generator 172, and adds it to the modulated signal converted to an analog signal, so as to be output to record the signal on the magnetic recording channel using a linear component on the magnetized characteristic curve of a magnetic channel.

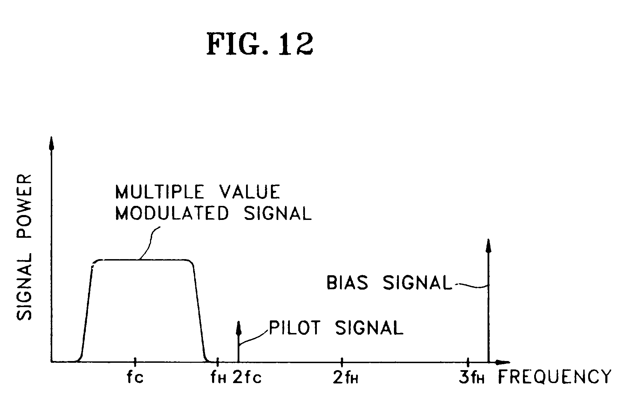

The frequency spectrum of the signal recorded on the magnetic recording channel is as shown in Figure 12.

Among the signals reproduced through the magnetic recording medium 182, a pilot signal is detected by band-pass filter 201. The carrier wave regenerator 202 reproduces a carrier wave in synchronization with the reproduced signal and so as to be input to the demodulator 211.

Also, the signal reproduced through the magnetic channel (the magnetic recording medium) is converted to digital data through the A/D converter 191 and the signal distorted due to the channel is compensated through the reproducing equalizer 192, to be input to the demodulator 211. The reproducing equalizer 192 is composed of a 90° phase correcting circuit by the differential characteristic of a magnetic channel and an amplitude correcting circuit for correcting amplitude attenuation of a signal.

The output of the reproducing equalizer 192 is multiplied to the carrier wave reproduced by the carrier wave reproducer 202 to be demodulated in the demodulator 211. The frequency and the phase of the signal are compensated through first and second low-pass equalizers 212 and 213 and then decoded through Viterbi decoder 230.

The synchronizing flag signal detector 220 controls the Viterbi decoder 230 by detecting a synchronizing flag signal from the demodulated signal output from first and second low-pass equalizers 212 and 213 and decodes the original data by not letting the value of a non-trace pass memory 234 be output while the synchronizing flag signal is "high (1)".

The I and Q data input to the Viterbi decoder 230 is calculated as the evaluated value for the respective branches by the branch evaluated value computing circuit 231 and is transmitted to adder/comparator/selector circuit 232 and status memory 233.

The branch evaluated value computing circuit 231 which computes an evaluated value with input data and coded data, computes all the values of the I and Q channels, respectively, squares the respective values, adds the I and Q values having a signal point on a signal constellation diagram and extracts their square roots. Thus all of 32 signal points are computed.

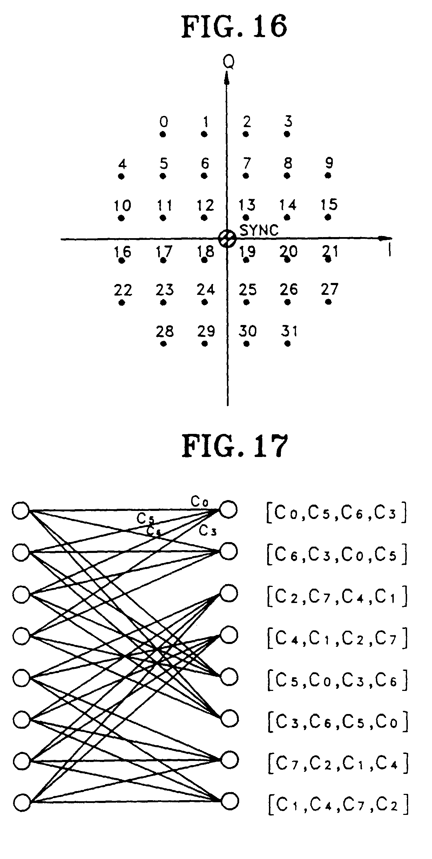

The adder/comparator/selector circuit 232 adds the evaluated values of both the branch evaluated value computing circuit 231 and the status memory 233, compares the branch evaluated values in accordance with the respective states on the Trellis diagram indicating the status diagram shown in Figure 16 in a time scale, selects the least of the evaluated values to store it in the state memory 233 again, transfer the information on the survived paths of the respective states to the non-trace path memory 234 to output decoded final data.

In other words, the adder/comparator/selector circuit 232 adds a current evaluated value to an existing evaluated value of paths, and selects the least of the evaluated values to extract a path select signal and a newly evaluated value.

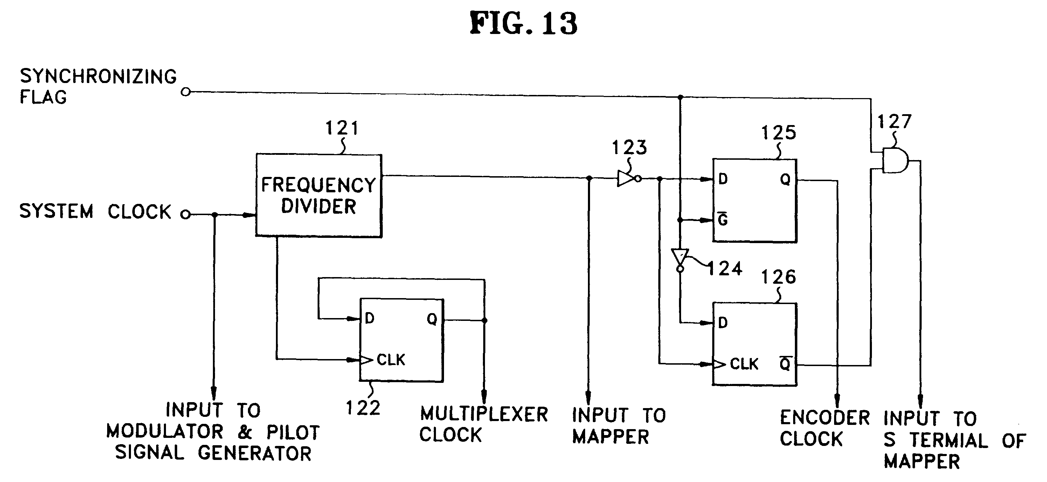

Figure 13 is a detailed circuit diagram of the synchronizing signal controller shown in Figure 10.

In Figure 13, reference numeral 121 denotes a frequency-divider, 122, 125 and 126 are D flip-flops, 123 and 124 are inverters and 127 is an AND gate.

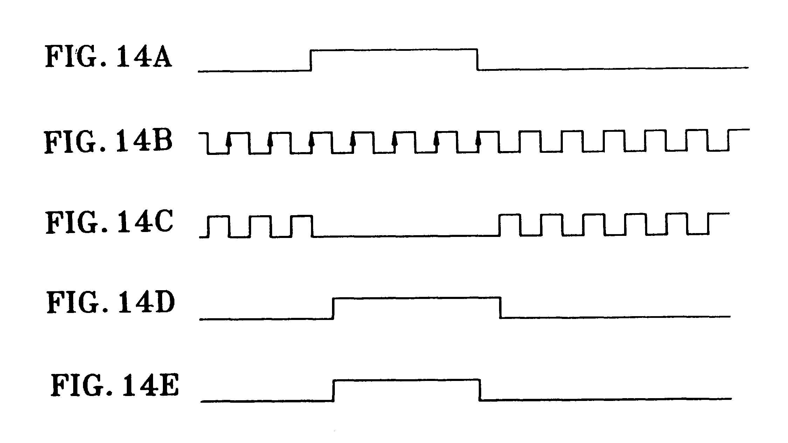

The operation of the synchronizing signal controller shown in Figure 13 will be explained with reference to Figures 14A to 14E.

Assuming that a system clock is Q Mhz, the system clock is frequency-divided through the frequency-divider 121 by a frequency division ratio of Q/n, the frequency-divided clock signal (shown in Figure 14B) is input to the mapper 143 shown in Figure 10 as a clock signal and at the same time input to the clock terminal CLK of the D flip-flop 122 to be frequency-divided by two, and finally is input as a clock signal of the multiplexer 130 shown in Figure 10.

Also, the output of the inverter 123 is input to the input terminal D of the D flip-flop 125 having a latch function and the clock terminal CLK of the D flip-flop 126.

The synchronizing flag signal shown in Figure 14A is input to an enabling terminal G of the D flip-flop 125 and also input to the input terminal D of the D flip-flop 126 through the inverter 124.

The output (shown in Figure 14C) of the D flip-flop 125 is input as a clock signal of the convolution encoder 142 shown in Figure 10, the inverted output $\overline{Q}$ of the D flip-flop 126 as shown in Figure 14D is logically multiplied by the synchronizing flag signal shown in Figure 14A, through the AND gate 127, and the output signal shown in Figure 14E is input to the enabling terminal S of the mapper 143 shown in Figure 10.

Also, the system clock is input as the address clock of the modulator 153 and the pilot signal generator 161 shown in Figure 10.

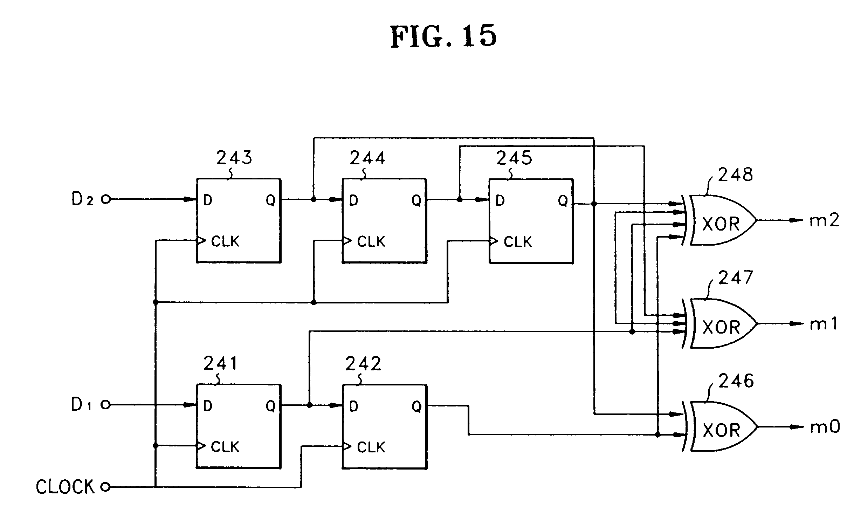

Meanwhile, while the synchronizing flag signal shown in Figure 14A is "1," the convolution encoder 152 does not operate. While the synchronizing flag signal is "0," 2-bit data input to the convolution encoder 142 are coded to be output as 3 bits. The detailed circuit diagram of the convolution encoder 142 is as shown in Figure 15.

In Figure 15, numerals 241 to 245 are D flip-flops, 246 to 248 are exclusive-OR gates (XOR).

In the following description related to the example of Figure 15, numerals 241 to 242 now denote D flip- flops. These reference signs do not fall within the terms of the claims.

The operation of Figure 15 will be explained with reference to Figures 16 to 18.

The clock signal (shown in Figure 14C) output from the D flip-flop 125 is input to the clock terminal CLK of the D flip-flops 241 to 245.

The 2-bit data output from the multiplexer 130 are input to the input terminal of the D flip-flops 241 to 245.

The output of the D flip-flop 241 is input to the input terminal D of the D flip-flop 242 and a first input terminal of the XOR 247, and the output of the D flip-flop 242 is input to a first input terminal of the XOR 246 and a first input terminal of the XOR 248.

The output of the D flip-flop 243 is input to the input terminal D of the D flip-flop 244, a second input terminal of the XOR 246 and a fourth input terminal of the XOR 248 and the output of the D flip-flop 244 is input to the input terminal D of the D flip-flop 245 and a third input terminal of the XOR 247. The output of the D flip-flop 245 is input to a second input terminal of the XOR 247 and a third input terminal of the XOR 248. The output of the XOR 246 becomes the lowest encoded bit, the output of the XOR 247 becomes an upper bit and the output of the XOR 248 becomes the uppermost bit.

The logic states of the input and output according to the present state and next state of the convolution encoder shown in Figure 15 are as follows.

(Logic table)

| INPUT | PRESENT STATE | NEXT STATE | OUTPUT |
|-------|---------------|------------|--------|
| 00 | 000 | 000 | 000 |
| 01 | 001 | 000 | 000 |
| 10 | 010 | 000 | 000 |
| 11 | 011 | 000 | 111 |
| 00 | 100 | 010 | 001 |
| 01 | 101 | 010 | 001 |
| 10 | 110 | 010 | 110 |

(Logic table)   (continued)

| INPUT | PRESENT STATE | NEXT STATE | OUTPUT |
|-------|---------------|------------|--------|
| 11 | 111 | 010 | 000 |
| 00 | 000 | 001 | 111 |
| 01 | 001 | 001 | 101 |
| 10 | 010 | 001 | 010 |
| 11 | 011 | 001 | 100 |
| 00 | 100 | 011 | 011 |
| 01 | 101 | 011 | 110 |
| 10 | 110 | 011 | 011 |
| 11 | 111 | 011 | 010 |
| 00 | 000 | 100 | 101 |
| 01 | 001 | 100 | 110 |
| 10 | 010 | 100 | 001 |
| 11 | 011 | 100 | 010 |
| 00 | 100 | 110 | 011 |
| 01 | 101 | 110 | 111 |
| 10 | 110 | 110 | 010 |
| 11 | 111 | 110 | 110 |
| 00 | 000 | 101 | 011 |
| 01 | 001 | 101 | 100 |
| 10 | 010 | 101 | 011 |
| 11 | 011 | 101 | 100 |
| 00 | 100 | 111 | 100 |
| 01 | 101 | 111 | 101 |
| 10 | 110 | 111 | 100 |
| 11 | 111 | 111 | 001 |

The convolution encoder 142 is devised so as not to have a catastrophe phenomenon that an error is spread infinitely and that an error rate is reduced at the time of decoding.

The n+1 bits output through the convolution encoder 142 are mapped as in the signal constellation shown in Figure 16 to be output through I and Q channels.

The origin in Figure 16 is where synchronizing data are mapped. The synchronizing data is mapped at the origin while the synchronizing flag signal input by the synchronizing signal controller 120 not through the convolution encoder 142 is "1," where the synchronizing signal is less affected by an error to facilitate the detection of the synchronizing flag signal from the synchronizing flag signal detector 220.

In the signal constellation illustrated in Figure 16, the signals are mapped so that coding gains are increased in the manner that the parallel shifted portions are set-partitioned farthest and the shifted signal in the same state is set partitioned far, among the signals encoded in accordance with the state diagram of Figure 17.

The respective sets partitioned into 8 sets are as follows.

$C_0$ = [00000(0), 01101(13), 10111(23), 11011(27)],
$C_1$ = [00001(1), 01010(10), 10110(14), 11000(24)],
$C_2$ = [00101(5), 01001(9), 10011(19), 11100(28)],
$C_3$ = [00100(4), 01000(8), 10010(18), 11111(31)],
$C_4$ = [00011(3), 01100(12), 10110(22), 11010(26)],
$C_5$ = [00110(6), 10000(16), 10100(20), 11101(29)],
$C_6$ = [00010(2), 01011(11), 10000(15), 11001(25)] and
$C_7$ = [00111(7), 10001(17), 10101(21), 11110(30)]

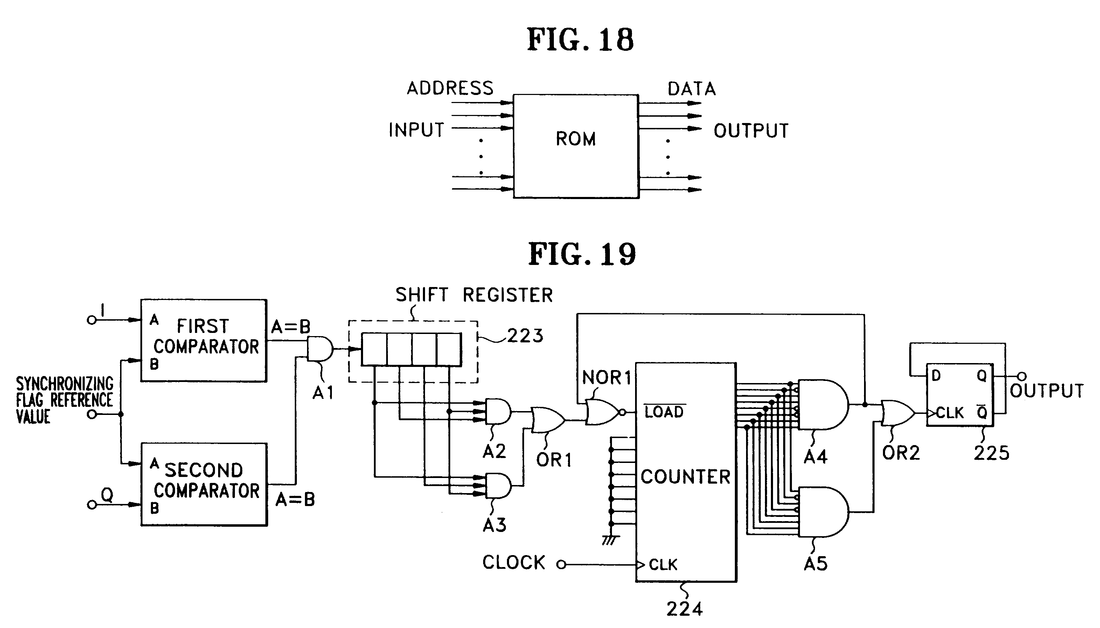

Figure 18 shows a structure of the ROM table when the mapper is constructed in an ROM.

Figure 19 is a detailed circuit diagram of the synchronizing flag detector shown in Figure 10.

In Figure 19, numerals 221 and 222 are first and second comparators, 223 is a shift register, 224 is a counter, 225 is a D flip-flop, A1 to A5 are AND gates, N1 is a NOR gate, OR1 and OR2 are OR gates.

Next, the operation of the synchronizing flag detector shown in Figure 19 will be explained.

Referring to Figure 19, the I and Q channel data output through the first and second low pass equalizers 212 and 213 shown in Figure 10 are compared with the specific synchronization patterned data by the comparators 221 and 222 and the compared values are logically multiplied in the first AND gate AI to be input to the shift register 223. The synchronization patterned data which are predetermined synchronizing flag reference values, are "0000" since they are mapped at the origin.

The value of "1111", "1101" or "1011" of the shift register 223 is detected in the second and third AND gates A2 and A3 and input to the load port $\overline{LOAD}$ of the counter 224 through the OR gate OR1 and NOR gate NOR 1.

If a signal is input to the load port $\overline{LOAD}$ of the counter 224, the counter 224 counts the number of clock pulse for which synchronizing flag signals are repeated. If the counted values are data corresponding to the points at which the "high" interval of the synchronizing flag signal starts and ends, they are input to the clock of the D flip-flop 225 through the fourth and fifth AND gates A4 and A5 and the second OR gate OR2 and a synchronizing flag signal is output from the D flip-flop 225. The signal counted as often as the frequency of the synchronizing flag signal is negative logic summed with the signal compared by the comparators 221 and 222 through the NOR gate NOR to be loaded to the load port $\overline{LOAD}$. The synchronizing flag signal is input to a Viterbi decoder 400.

As stated above, the illustrated examples of digital signal magnetic recording and reproducing apparatus increase frequency utilization efficiency by adopting a multiple valued digital modulation method, which is used in the communication field, having a high recording efficiency due to the low error rate of the reproduced data, and improves a recording bit rate without increasing recording channels, thereby enabling high density recording.

## Claims

1. A digital signal magnetic recording and reproducing apparatus which modulates a digital image input signal, records the modulated signal on a magnetic medium (52), reads the signal recorded thereon and demodulates it to the original signal, said apparatus being characterised by :

   coding means (10, 140) for converting an input digital image signal into a multiple valued digital signal;

   modulating means (20, 150) for digitally quadrature-amplitude-modulating and phase-shift-keying-modulating said multiple valued digital signal according to a carrier signal;

   pilot signal mixing means (30, 160) for generating a pilot signal and digitally mixing the pilot signal with said modulated signal;

   recording controlling means (40, 170) for forming a magnetized signal suitable for recording on a magnetic recording medium (52, 182) from the modulated signal mixed with said pilot signal;

   reproducing controlling means (60, 190) for outputting a digital signal of which the signal distortion and deterioration produced in a transmission system are corrected, from a magnetized signal reproduced from said magnetic recording medium (52);

   carrier wave restoring means (70, 200) for generating a clock signal having the carrier signal frequency by detecting a pilot signal from said reproduced magnetized signal;

   demodulating means (80, 210) for digitally demodulating the modulated signal output from said reproducing controlling means (60) according to the carrier signal restored from said carrier wave restoring means (70, 200); and

   decoding means (100, 230) for outputting original digital data by Viterbi-decoding convolutionally coded data from the output of said demodulating means (80, 210).

2. A digital signal magnetic recording and reproducing apparatus, as claimed in claim 1, further comprising noise eliminating means (90) for restricting bands and decreasing clock frequencies to improve a signal-to-noise ratio of the output of said demodulating means (80) supplied to said decoding means (100).

3. A digital signal magnetic recording and reproducing apparatus, as claimed in claim 1 or 2, wherein said modulating means (20, 150) comprises:

a first ROM (241) in which a first carrier signal to be expressed in sine components is stored;

a second ROM (242) in which a second carrier signal to be expressed in cosine components is stored;

a first multiplier (25) for multiplying the first carrier signal output from said first ROM (241) by the in-phase (I) channel data output from said coding means (10);

a second multiplier (26) for multiplying the second carrier signal output from said second ROM (242) by the quadrature-phase (Q) channel data output from said coding means (10); and

a first adder (27) for adding the outputs of said first and second multipliers (25,26).

4. A digital signal magnetic recording and reproducing apparatus, as claimed in claim 1 or 2, wherein said modulating means (20, 150) comprises:

first and second pulse shaping filters (21,22,151,152) for wave-shaping and band-restricting of the I and Q channel data output from said coding means (10);

a first carrier signal generator (24) having a first ROM (241) wherein a first carrier signal to be expressed in sine components is stored and a second ROM (242) wherein a second carrier signal to be expressed in cosine components is stored;

a first balanced-modulator (25) having a first AND gate combination circuit (251) for combining the I channel data output from said coding means (10, 140) with a first carrier signal output from said first ROM (241), a first adder combination circuit (252) for adding the output of the first AND gate combination circuit (251) and a first latch (253) for temporarily storing the output of the first adder combination circuit (252);

a second balanced-modulator (26) having a second AND gate combination circuit (261) for combining the Q channel data output from said coding means (10, 140) with a second carrier signal output from said second ROM (242), a second adder combination circuit (262) for adding the output of the second AND gate combination circuit (261) and a second latch (263) for temporarily storing the output of the second adder combination circuit (262); and

a first adder (27) having a third adder combination circuit (271) for adding the outputs of said first and second latches (253,263), that is, the modulated signal of the I channel and the modulated signal of the Q channel, and a third latch (272) for temporarily storing the quadrature-amplitude-modulated signal which is the output of said third adder combination circuit (271).

5. A digital signal magnetic recording and reproducing apparatus, as claimed in any of the preceding claims, wherein said pilot signal mixing means (30, 160) comprises:

a pilot signal generator (31, 161) for generating a pilot signal having a frequency equal to a predetermined number of times the frequency of the carrier signal; and

a second adder (32, 162) for adding the pilot signal to the modulated data of said modulating means (20, 150).

6. A digital signal magnetic recording and reproducing apparatus, as claimed in any of the preceding claims, wherein said recording controlling means (40) comprises:

a digital-to-analog (D/A) converter (41) for converting the output of said pilot signal mixing means (30) to an analog signal;

a recording amplifier (42) for amplifying the output of said D/A converter (41);

a bias signal generator (43) for generating a bias signal; and

a third adder (44) for adding the bias signal to the output of said recording amplifier (42).

7. A digital signal magnetic recording and reproducing apparatus, as claimed in any of claims 1 to 5, wherein said recording controlling means (170) comprises:

a digital-to-analog (D/A) converter (171) for converting the output of said pilot signal mixing means (160) into an analog signal;

a bias signal generator (172) for generating a bias signal to use a linear portion of a magnetized characteristic curve considering non-linear characteristics of a magnetic channel; and

a third adder (173) for adding the output of said D/A converter to the bias signal of said bias signal generator.

8. A digital signal magnetic recording and reproducing apparatus, as claimed in any of claims 1 to 7, wherein said reproducing controlling means (60) comprises:

a reproducing amplifier (61) for amplifying a magnetized signal reproduced from said magnetic recording medium (52);

a phase shifter (62) for shifting the phase of the output of said reproducing amplifier (61) to compensate a phase shift by the differential characteristics of a magnetic channel at the time of recording;

a low-pass filter (63) for filtering the reproduced signal from the output of said phase shifter (62);

an analog-to-digital (A/D) converter (64) for converting the output of said low-pass filter (63) into a digital signal form; and

a band-pass equalizer (65) for receiving the output of said A/D converter (64) and correcting signal distortion and deterioration produced in a transmission system.

9. A digital signal magnetic recording and reproducing apparatus, as claimed in any of claims 1 to 7, wherein said reproducing controlling means (190) comprises:

an analog-to-digital (A/D) converter (191) for A/D converting the signal reproduced from said magnetic recording medium (182); and

a reproducing equalizer (192) for correcting both phase and amplitude attenuation of a reproduced signal due to a differential magnetic channel characteristic.

10. A digital signal magnetic recording and reproducing apparatus, as claimed in any of the preceding claims, wherein said carrier wave restoring means (70, 200) comprises:

a band-pass filter (71, 201) for detecting a pilot signal from an output of said reproducing controlling means (60); and

a phase locked loop (PLL) (72, 202) for generating a clock signal having a frequency corresponding to that of the carrier signal from the output of said band-pass filter (71, 201).

11. A digital signal magnetic recording and reproducing apparatus, as claimed in any of the preceding claims, wherein said demodulating means (80, 210) comprises:

a third ROM (841) from which a first carrier signal to be expressed in sine components is read in accordance with a clock corresponding to said restored carrier signal;

a fourth ROM (842) from which a second carrier signal to be expressed in cosine components is read in accordance with a clock corresponding to said restored carrier signal;

a third multiplier (85) for multiplying the modulated signal output from said reproducing controlling means (60, 190) by the first carrier signal output from said third ROM (841);

a fourth multiplier (86) for multiplying the modulated signal output from said reproducing controlling means (60, 190) by the second carrier signal output from said fourth ROM (842); and

a fourth adder for adding the outputs of said third and fourth multipliers (85,86).

**12.** A digital signal magnetic recording and reproducing apparatus, as claimed in any of claims 1 to 10, wherein said demodulating means (80, 210) comprises:

a second carrier signal generator (84) having a third ROM (841) from which a first carrier signal to be expressed in sine components is read in accordance with a clock corresponding to said restored carrier signal and a fourth ROM (842) from which a second carrier signal to be expressed in cosine components is read in accordance with a clock corresponding to said restored carrier signal;

a third balanced-modulator (85) having a fourth AND gate combination circuit (851) for combining the modulated signal output from said reproducing controlling means (60, 190) with the first carrier signal output from said third ROM (841), a fourth adder combination circuit (852) for adding the output of the fourth AND gate combination circuit (851) and a fourth latch (853) for temporarily storing the output of the fourth adder combination circuit (852);

a fourth balanced-modulator (86) having a fifth AND gate combination circuit (861) for combining the modulated signal output from said reproducing controlling means (60, 190) with the second carrier signal output from said fourth ROM (842), a fifth adder combination circuit (862) for adding the output of the fifth AND gate combination circuit (861) and a fifth latch (863) for temporarily storing the output of the fifth adder combination circuit (862); and

first and second matching filters (82,83) for restricting the output bands of said third and fourth balanced-modulators (85,86), or first and second low pass equalisers (212, 213) for correcting the amplitudes and phases of the output bands of said third and fourth balanced-modulators (85,86).

**13.** A digital signal magnetic recording and reproducing apparatus, as claimed in claims 2 and 12, wherein said noise eliminating means (90) comprises:

first and second decimators (91,92) for decreasing a clock frequency to improve a signal-to-noise (S/N) ratio of the output of the first and second matching filters (82,83);

first and second base-band equalizers (93,94) for compensating the output signals of said first and second decimators (91,92); and

third and fourth decimators (95,96) for redecimating the outputs of said first and second base-band equalizers (93,94) to decrease the clock frequency.

**14.** A digital signal magnetic recording and reproducing apparatus as claimed in any preceding claim, comprising :

digital-to-analog (D/A) converting means (41) for converting the modulated signal with which said pilot signal is mixed into an analog signal;

said recording controlling means (40) comprising bias signal generating means for generating a bias signal having a frequency more than a predetermined number of times the frequency of a carrier signal to be recorded using a linear portion on a magnetizing characteristic curve of a magnetic channel, combining the generated bias signal with the output of said D/A converting means and transmitting the result to said magnetic recording medium (52); and

said reproducing controlling means (60) comprising analog-to-digital (A/D) converting means (64) for outputting an analog magnetized signal reproduced from said magnetic recording medium (52) as a digital signal form after correcting the signal distortion and deterioration of the signal, produced in the transmission system;

**15.** A digital signal magnetic recording and reproducing apparatus as claimed in any preceding claim, comprising :

synchronizing signal inserting means (110) for inserting a synchronizing signal to said input digital data supplied to said coding means (140) and outputting a synchronizing flag signal;

synchronizing signal controlling means (120) for controlling the coding of said coding means (140) by receiving said synchronizing flag signal;

synchronizing flag detecting means (220) for restoring a synchronizing flag signal from said demodulated signal output by said demodulating means (210); and

said decoding means (230) outputting original digital data by Viterbi-decoding convolutionally coded data from the output of said demodulating means (210) in accordance with said synchronizing flag signal.

**16.** A digital signal magnetic recording and reproducing apparatus, as claimed in claim 13, wherein said coding means (140) comprises:

a buffer (141) for temporarily storing part of the bits of data output from said synchronizing signal inserting means (110);

a convolution encoder (142) in which a coding gain and a bit error rate are considered from the data output from said synchronizing signal inserting means (110); and

a mapper (143) which sets the relationship between signal points through said convolution encoder (142) so that a coding gain becomes large at the time of decoding.

**17.** A digital signal magnetic recording and reproducing apparatus, as claimed in claim 16, further comprising a selecting means (130) for selectively outputting some of the bits of the signals output from said synchronizing signal inserting means (110) to said mapper (143) and the rest of the bits to said convolution encoder (142) so as to be parallel shifted.

**18.** A digital signal magnetic recording and reproducing apparatus, as claimed in claim 16 or 17, wherein said mapper (143) maps the synchronizing signal output from said synchronizing signal inserting means (110) at the origin on a signal constellation diagram while said synchronizing flag signal is in an "excited" level period.

**19.** A digital signal magnetic recording and reproducing apparatus, as claimed in claim 14, 15 or 16, wherein said mapper (143) is constituted by ROMs, and in the signal constellation, a parallel shifted portion among signals of said convolution encoder (142) is set-partitioned farthest and a signal shifted in the same state is set-partitioned far.

**20.** A digital signal magnetic recording and reproducing apparatus, as claimed in claim 17, or any of claims 18 or 19 as appendant thereto, wherein said synchronizing signal controlling means (120) comprises:

a frequency-divider (121) for frequency-dividing a system clock by a predetermined number and inputting the frequency-divided clock as a clock signal of the mapper (143);

a first delay element (122) for frequency-dividing the output of said frequency-divider (121) again and outputting a clock signal of said selecting means (130);

a second delay element (125) for outputting the clock signal of said convolution encoder (142) by receiving the output of said frequency-divider (121) as its input, and receiving said synchronizing flag signal as an enabling signal;

a third delay element (126) for delaying said synchronizing flag signal by one clock portion; and

a logic element (127) for logic multiplying said synchronizing flag signal by the output of said third delay element (126) and outputting the result to an enabling terminal of said mapper (143).

**21.** A digital signal magnetic recording and reproducing apparatus, as claimed in any of claims 15 to 20, wherein said synchronizing flag detecting means (220) comprises:

comparing means for comparing the I and Q channel data output through said first and second low-pass equalizers (212,213) with specific synchronization patterned data being predetermined synchronizing flag reference values;

detecting means for detecting specific data whereon a synchronizing signal is loaded and an adjacent predetermined number of data thereto from said compared values; and

counting means for counting the synchronizing flag signal for the period of the synchronizing flag signal, detecting the starting and ending points of excited states of the synchronizing flag signal and outputting the synchronizing flag signal.

22. A digital signal magnetic recording and reproducing apparatus, as claimed in any of claims 14 to 21, wherein said decoding means (230) comprises :

a branch evaluated value computing circuit (231) for computing the evaluated values for the respective branches of the I and Q channel data demodulated from said first and second low-pass equalizers (212,213);

an adder/comparator/selector circuit (232) for comparing the branch evaluated values in accordance with respective states on a Trellis diagram indicated in a time scale and selecting the least evaluated value;

a state memory (233) for storing the output of said adder/comparator/selector circuit (232); and

a non-trace path memory (234) for decoding information on survival paths according to respective states from said adder/comparator/selector circuit (232).

23. A digital signal magnetic recording and reproducing apparatus, as claimed in claim 22, wherein said decoding means (230) is controlled in accordance with the synchronizing flag signal detected from said synchronizing flag detecting means (220) and decodes the original synchronizing data in the manner that the value of said non-trace path memory is not output while the synchronizing flag signal is at an "excited" level.

24. A digital signal recording and reproducing apparatus according to any of the preceding claims, wherein said apparatus comprises a video recorder.


**Patentansprüche**

1. Digitalsignal-Magnetaufnahme- und Wiedergabegerät, das ein digitales Bildeingangssignal moduliert, das modulierte Signal auf einem magnetischen Medium (52) aufzeichnet, das darauf aufgezeichnete Signal liest und es zum originalen Signal demoduliert, wobei das Gerät gekennzeichnet ist durch:

eine Kodiereinrichtung (10, 140) zum Konvertieren eines digitalen Bildeingangssignals in ein mehrwertiges Digitalsignal;

eine Modulationseinrichtung (20, 150) zur digitalen Amplitudenquadraturmodulation und zur digitalen Phasenmodulation des mehrwertigen Digitalsignais entsprechend einem Trägersignal;

eine Führungssignal-Mischeinrichtung (30, 160) zum Erzeugen eines Führungssignals und zum digitalen Mischen des Führungssignals mit dem modulierten Signal;

einer Aufnahmekontrolleinrichtung (40, 170), um aus dem mit dem Führungssignal gemischten modulierten Signal ein zum Aufnehmen auf einem magnetischen Aufzeichnungsmedium (52, 182) geeignetes magnetisches Signal zu bilden;

eine Wiedergabekontrolleinrichtung (60, 190) zum Ausgeben eines Digitalsignals, dessen in einem Übertragungssystem produzierte Signalverzerrung und Verschlechterung korrigiert ist, aus einem von dem magnetischen Aufzeichnungsmedium (52) reproduzierten magnetischen Signal;

eine Trägerwellen-Wiederherstellungseinrichtung (70, 200) zum Erzeugen eines Taktsignals mit der Frequenz des Trägersignals, in dem ein Führungssignal des reproduzierten magnetischen Signals erfaßt wird;

eine Demodulationseinrichtung (80, 210) zum digitalen Demodulieren des modulierten Signals, das von der Wiedergabekontrolleinrichtung (60) gemäß dem von der Trägerwellen-Wiederherstellungseinrichtung (70, 200) wiederhergestellten Trägersignal ausgegeben wird; und

eine Decodiereinrichtung (100, 230) zum Ausgeben originaler digitaler Daten durch Viterbi-Dekodierung rekurrent kodierter Daten von dem Ausgang der Demodulationseinrichtung (80, 210).

2. Digitalsignal-Magnetaufnahme- und Wiedergabegerät gemäß Anspruch 1, weiterhin mit einer Rauschunterdrückungseinrichtung (90) zur Bänderbeschränkung und Verringerung von Taktfrequenzen, um ein Signal-zu-Rausch-Verhältnis des Ausgangssignals der Demodulationseinrichtung (80), das der Dekodiereinrichtung (100) zugeführt wird, zu verbessern.

3. Digitalsignal-Magnetaufnahme- und Wiedergabegerät gemäß Anspruch 1 oder 2, wobei die Modulationseinrichtung (20, 150) umfaßt:

einen ersten ROM (241), in dem ein erstes Trägersignal, das in Sinuskomponenten auszudrücken ist, gespeichert wird;

einen zweiten ROM (242), in dem ein zweites Trägersignal, das in Cosinuskomponenten auszudrücken ist, gespeichert wird;

einen ersten Multiplizierer (25) zum Multiplizieren des vom ersten ROM (241) ausgegebenen ersten Trägersignals mit den von der Kodiereinrichtung (10) ausgegebenen In-Phase(I)-Kanaldaten;

einen zweiten Multiplizierer (26) zum Multiplizieren des vom zweiten ROM (242) ausgegebenen zweiten Trägersignals mit den von der Kodiereinrichtung (10) ausgegebenen phasenquadrierten (Q) Kanaldaten; und

einen ersten Addierer (27) zum Addieren der Ausgänge der ersten und zweiten Multipllzierer (25, 26).

4. Digitalsignal-Magnetaufnahme- und Wiedergabegerät gemäß Anspruch 1 oder 2, wobei die Modulationseinrichtung (20, 150) umfaßt:

erste und zweite Pulsformungsfilter (21, 22, 151, 152) zur Wellenformung und Bandbeschränkung der von der Kodiereinrichtung (10) ausgegebenen I- und Q-Kanaldaten;

einen ersten Trägersignalgenerator (24) mit einem ersten ROM (241), wobei ein erstes Trägersignal, das in Sinuskomponenten auszudrücken ist, gespeichert ist, und mit einem zweiten ROM (242), wobei ein zweites Trägersignal, das in Cosinuskomponenten auszudrücken ist, gespeichert ist;

einen ersten Gegentaktmodulator (25) mit einer ersten UND-Gatter-Kombinationsschaltung (251) zum Kombinieren der von der Kodiereinrichtung (10, 140) ausgegebenen I-Kanaldaten mit einem ersten vom ersten ROM (241) ausgegebenen Trägersignal, einer ersten Addierkombinationsschaltung (252) zum Addieren des Ausgangssignals der ersten UND-Gatter-Kombinationsschaltung (251), und mit einem ersten Signalspeicher (253) zum temporären Speichern des Ausgangssignals der ersten Addierkombinationschaltung (252);

einen zweiten Gegentaktmodulator (26) mit einer zweiten UND-Gatter-Kombinationsschaltung (261) zum Kombinieren der Q-Kanaldatenausgangssignale der Kodiereinrichtung (10, 140) mit einem zweiten Trägerausgangssignal des zweiten ROMs (242), einer zweiten Addierkombinationsschaltung (262) zum Addieren des Ausgangs der zweiten UND-Gater-Kombinationsschaltung (261) und einem zweiten Signalspeicher (263) zum temporären Speichern des Ausgangssignals der zweiten Addierkombinationschaltung (262); und

einen ersten Addierer (27) mit einer dritten Addierkombinationsschaltung (271) zum Addieren der Ausgangssignale der ersten und zweiten Signalspeicher (253, 263), d.h. des modulierten Signals des I-Kanals und des modulierten Signals des Q-Kanals, und einem dritten Signalspeicher (272) zum temporären Speichern aes amplitudenquadraturmodulierten Signals, das das Ausgangssignal der dritten Addierkombinationsschaltung (271) ist.

5. Digitalsignal-Magnetaufnahme- und Wiedergabegerät gemäß einem der vorhergehenden Ansprüche, wobei die Führungssignal-Mischeinrichtung (30, 160) umfaßt:

einen Führungssignalgenerator (31, 161) zum Erzeugen eines Führungssignals mit einer Frequenz, die gleich ist einer vorbestimmten Anzahl von Vielfachen der Frequenz des Trägersignals; und

einen zweiten Addierer (32, 162) zum Addieren des Führungssignals und der modulierten Daten der Modulationseinrichtung (20, 150).

6. Digitalsignal-Magnetaufnahme- und Wiedergabegerät gemäß einem der vorhergehenden Ansprüche, wobei die Aufzeichnungskontrolleinrichtung (40) umfaßt:

einen Digital-Analog(D/A)-Wandler (41) zum Umwandeln des Ausgangssignals der Führungssignalmischeinrichtung (30) in ein analoges Signal;

einen Aufnahmeverstärker (42) zum Verstärken des Ausgangssignals des D/A-Wandlers (41);

einen Vorspannungssignalgenerator (42) zum Erzeugen eines Vorspannungssignals; und

einen dritten Addierer (44) zum Addieren des Vorspannungssignals zum Ausgangssignal des Aufnahmeverstärkers (42).

7. Digitalsignal-Magnetaufnahme- und Wiedergabegerät gemäß einem der Ansprüche 1 bis 5, wobei die Aufnahmekontrolleinrichtung (170) umfaßt:

einen Digital-Analog(D/A)-Wandler (171) zum Umwandeln des Ausgangssignals der Führungssignalmischeinrichtung (160) in ein analoges Signal;

einen Vorspannungssignalgenerator (172) zum Erzeugen eines Vorspannungssignals, um einen linearen Bereich einer charakteristischen Magnetisierkurve, die die nicht-linearen Eigenschaften eines magnetischen Kanals berücksichtigt, zu verwenden; und

einen dritten Addierer (173) zum Addieren des Ausgangssignals des D/A-Wandlers zum Vorspannungssignal des Vorspannungssignalgenerators.

8. Digitalsignal-Magnetaufnahme- und Wiedergabegerät gemäß einem der Ansprüche 1 bis 7, wobei die Aufnahmekontrolleinrichtung (60) umfaßt:

einen Wiedergabeverstärker (61) zum Verstärken eines magnetischen Signals, das von dem magnetischen Aufzeichnungsmedium (52) reproduziert wird;

einen Phasenschieber (62) zum Verschieben der Phase des Ausgangssignals des Wiedergabeverstarkers (61), um eine Phasenverschiebung durch die unterschiedlichen Eigenschaften eines magnetischen Kanals zur Zeit der Aufnahme zu kompensieren:

einen Tiefpaßfilter (63) zum Filtern des reproduzierten Signals vom Ausgang ces Phasenschiebers (62);

einen Analog-Digital(A/D)-Wandler (64) zum Umwandeln des Ausgangssignals des Tiefpaßfilters (63) in eine digitale Signalform; und

einen Bandpaß-Entzerrer (65) zum Empfangen des Ausgangssignals des A/D-Wandlers (64) und zum Korrigieren einer in einem Übertragungssystem produzierten Signalverzerrung und Verschlechterung.

9. Digitalsignal-Magnetaufnahme- und Wiedergabegerät gemäß einem der Ansprüche 1 bis 7, wobei die Wiedergabekontrolleinrichtung (190) umfaßt:

einen Analog-Digital(A/D)-Wandler (191) zum A/D-Wandeln des vom magnetischen Aufzeichnungsmedium (182) reproduzierten Signals; und

einen Wiedergabe-Entzerrer (192) zum Korrigieren von sowohl Phasen- als auch Amplitudenabschwächung eines reproduzierten Signals aufgrund einer unterschiedlichen Eigenschaft eines magnetischen Kanals.

10. Digitalsignal-Magnetaufnahme- und Wiedergabegerät gemäß einem der vorhergehenden Ansprüche, wobei die Trägerwellen-Wiederherstellungseinrichtung (70, 200) umfaßt:

ein Bandpaßfilter (71, 201) zum Erfassen eines Führungssignals am Ausgang der Wiedergabekontrolleinrichtung (60); und

einen Phasenregelkreis (PLL) (72, 202) zum Erzeugen eines Taktsignals mit einer Frequenz, die derjenigen des Tragersignals vom Ausgang des Bandpaßfilters (71, 202) entspricht.

11. Digitalsignal-Magnetaufnahme- und Wiedergabegerät gemäß einem der vorhergehenden Ansprüche, wobeie die Demodulationseinrichtung (80, 210) umfaßt:

einen dritten ROM (841), von dem ein in Sinuskomponenten auszudrückendes erstes Trägersignal in Übereinstimmung mit einem Takt, der dem wiederhergestellten Trägersignal entspricht, gelesen wird;

einen vierten ROM (842), von dem ein in Cosinuskomponenten auszudrückendes zweites Trägersignal in Übereinstimmung mit einem Takt, der dem wiederhergestellten Trägersignal entspricht, gelesen wird;

einen dritten Multiplizierer (85) zum Multiplizieren des von der Wiedergabekontrolleinrichtung (60, 190) ausgegebenen modulierten Signals mit dem vom dritten ROM (841) ausgegebenen ersten Trägersignal;

einen vierten Multiplizierer (86) zum Multiplizieren des von der Wiedergabekontrolleinrichtung (60, 190) ausgegebenen modulierten Signals mit dem vom vierten ROM (842) ausgegebenen zweiten Trägersignal; und

einen vierten Addierer zum Addieren der Ausgangssignale des dritten und vierten Multiplizierers (85, 86).

12. Digitalsignal-Magnetaufnahme- und Wiedergabegerät gemäß einem der Ansprüche 1 bis 10, wobei die Demodulationseinrichtung (80, 210) umfaßt:

einen zweiten Trägersignalgenerator (84) mit einem dritten ROM (841), von dem ein in Sinuskomponenten auszudrückendes erstes Trägersignal in Übereinstimmung mit einem Takt, der dem wiederhergestellten Trägersignal entspricht, gelesen wird, und einem vierten ROM (842), von dem ein in Cosinuskomponenten auszudrückendes zweites Trägersignal in Übereinstimmung mit einem Takt, der dem wiederhergestellten Trägersignal entspricht, gelesen wird;

einen dritten Gegentaktmodulator (85) mit einer vierten UND-Gatter-Kombinationsschaltung (851) zum Kombinieren des von der Wiedergabekontrolleinrichtung (60, 190) ausgegebenen modulierten Signals mit dem vom dritten ROM (841) ausgegebenen ersten Trägersignal, mit einer vierten Addierkombinatiorsschaltung (852) zum Addieren des Ausgangssignals der vierten UND-Gatter-Kombinationsschaltung (851) und einem vierten Signalspeicher (853) zum temporären Speichern des Ausgangs der vierten Addierkombinationsschaltung (852);

einen vierten Gegentaktmodulator (86) mit einer fünften UND-Gatter-Kombinationsschaltung (861) zum Kombinieren des von der Wiedergabekontrolleinrichtung (60, 190) ausgegebenen modulierten Signals mit dem vom vierten ROM (842) ausgegebenen zweiten Trägersignal, einer fünften Addierkombinationsschaltung (862) zum Addieren des Ausgangs der fünften UND-Gatter-Kombinationsschaltung (861) und einem fünften Signalspeicher (863) zum temporären Speichem des Ausgangs der fünften Addierkombinationsschaltung (862); und

erste und zweite Anpassungsfilter (82, 83) zum Beschränken der Ausgangsbänder der dritten und vierten Gegentaktmodulatoren (85, 86), oder erste und zweite Tiefpaß-Entzerrer (212, 213) zum Korrigieren der Amplituden und Phasen der Ausgangsbänder der dritten und vierten Gegentaktmodulatoren (85, 86).

13. Digitalsignal-Magnetaufnahme- und Wiedergabegerät gemäß Anspruch 2 und 12, wobei die Rauschunterdrükkungseinrichtung (90) umfaßt:

erste und zweite Dezimierer (91, 92) zum Verringern einer Taktfrequenzm ,um das Signal-zu-Rauschen(S/N)-Verhältnis des Ausgangs der ersten und zweiten Anpassungsfilter (82, 83) zu verbessern;

erste und zweite Basisbandentzerrer (93, 94) zum Kompensieren der Ausgangssignale der ersten und zweiten Dezimierer (91, 92); und

dritte und vierte Dezimierer (95, 96) zum Rückgängigmachen der Dezimierung der Ausgänge der ersten und zweiten Basisbandentzerrer (93, 94), um die Taktfrequenz zu verringern.

14. Digitalsignal-Magnetaufnahme- und Wiedergabegerät gemäß einem der vorhergehenden Ansprüche, das umfaßt:

eine Digital-Analog(D/A)-Wandlereinrichtung (41) zum Umwandeln des modulierten Signals, mit dem das Führungssignal gemischt ist, in ein analoges Signal;

die Aufnahmekontrolleinrichtung (40), die eine Vorspannungssignalerzeugungseinrichtung zum Erzeugen eines Vorspannungssignals mit einer Frequenz, die größer ist als eine vorbestimmte Anzahl vom Vielfachen der Frequenz eines aufzunehmenden Trägersignals, wobei ein linearer Bereich in einer charakteristischen Magnetisierungskurve eines Magnetkanals verwendet wird, umfaßt und die das erzeugte Vorspannungssignal mit dem Ausgangssignal der D/A-Wandlereinrichtung kombiniert und das Resultat zum magnetischen Aufzeichnungsmedium (52) überträgt; und

die Wiedergabekontrolleinrichtung (60), die eine Analog-Digital(AD)-Wandlereinrichtung (64) zum Ausgeben eines analogen magnetischen Signals, das vom magnetischen Aufnahmemedium (52) als eine digitale Signalform nach Korrigieren der Signalverzerrung und Verschlechterung des im Übertragungssystem produzierten Signals reproduziert wird, umfaßt.

15. Digitalsignal-Magnetaufnahme- und Wiedergabegerät gemäß einem der vorhergehenden Ansprüche, das umfaßt:

eine Syncnronisiersignal-Einfügeeinrichtung (110) zum Einfügen eines Synchronisiersignals in die von der Kodiereinrichtung (140) gelieferten digitalen Eingangsdaten und zum Ausgeben eines Synchronisierflagsignals;

eine Synchronisiersignal-Kontrolleinrichtung (120) zum Steuern der Kodierung der Kodiereinrichtung (140) durch Empfangen des Synchronisierflagsignals;

eine Synchronisierfag-Erfassungseinrichtung (220) zum Wiederherstellen eines Synchronisierflagsignals des von der Demodulationseinrichtung (210) ausgegebenen demodulierten Signals; und

die Dekodiereinrichtung (230), die die onginalen Digitaldaten durch Viterbi-Dekodierung rekurrent kodierter Daten aus dem Ausgang der Demodulationseinrichtung (210) in Übereinstimmung mit dem Synchronisierflagsignal ausgibt.

16. Digitalsignal-Magnetaufnahme- und Wiedergabegerät gemäß Anspruch 13, wobei die Kodiereinrichtung (140) umfaßt:

einen Puffer (141) zum zeitweisen Speichern eines Teils der Bits der Ausgangsdaten der Synchronisiersignal-Einfügeeinrichtung (110);

einen Faltungskodierer (142), in dem ein Kodierungsgewinn und eine Bit-Fehlerrate von den Ausgangsdaten der Synchronisiersignal-Einfügeeinrichtung (110) berücksichtigt werden; und

einen Mapper (143), der die Beziehung zwischen Signalpunkten durch den Faltungskodierer (142) so festlegt, daß ein Kodierungsgewinn während der Zeit des Dekodierens groß wird.

17. Digitalsignal-Magnetaufnahme- und Wiedergabegerät gemäß Anspruch 16, das weiterhin eine Auswahleinrichtung (130) zum selektiven Ausgeben einiger der Bits der von der Synchronisiersignal-Einfügeeinrichtung (110) ausgegebenen Signale zum Mapper (143) und die restlichen Bits zum Faltungskodierer (142), so daß diese parallel verschoben sind.

18. Digitalsignal-Magnetaufnahme- und Wiedergabegerät gemäß Anspruch 16 oder 17, wobei der Mapper (143) das Synchronisiersignal, das von der Synchronisiersignal-Einfügeeinrichtung (110) am Ursprung eines Signalkonstellationsdiagramms ausgegeben wird, aufzeichnet, während das Synchronisierflagsignal sich in einer Periode eines "angeregten" Zustands befindet.

19. Digitalsignai-Magnetaufnahme- und Wiedergabegerät gemäß einem der Ansprüche 14, 15 oder 16, wobei der Mapper (143) sich aus ROMs zusammensetzt, und in der Signalkonstellation unter den Signalen des Faltungskodierers (142) ein parallel verschobener Bereich am weitesten unterteilt festgelegt und ein in den gleichen Zustand verschobenes Signal als weit unterteilt festgelegt ist.

20. Digitalsignal-Magnetaufnahme- und Wiedergabegerät gemäß Anspruch 17 oder gemäß einem der Ansprüche 18 oder 19, wobei die Synchronisiersignal-Kontrolleinrichtung (120) umfaßt:

einen Frequenzteiler (121) zum Frequenz-Teilen eines Systemtakts durch eine vorbestimmte Zahl und Einspeisen des frequenzgeteilten Takts als ein Taktsignal des Mappers (143);

ein erstes Verzögerungselement (122) zum wiederholten Frequenz-Teilen des Ausgangs des Frequenzteilers (121) und zum Ausgeben eines Taktsignals der Auswahleinrichtung (130);

ein zweites Verzögerungselement (125) zum Ausgeben des Taktsignals des Faltungskodierers (142) durch Empfangen des Ausgangssignals des Frequenzteilers (121) als Eingangssignal, und zum Empfangen des Synchronisierflagsignals als ein Auslösesignal;

ein drittes Verzögerungselement (126) zum Verzögern des Synchronisierflagsignals um einen Taktsignalanteil; und

ein logisches Element (127) zum logischen Multiplizieren des Synchronisierflagsignals mit dem Ausgangssignal des dritten Verzögerungselements (126) und zum Ausgeben des Ergebnisses zu einem Freigabeanschluß des Mappers (143).

21. Digitalsignal-Magnetaufnahme- und Wiedergabegerät gemäß einem der Ansprüche 15 bis 20, wobei die Synchronisierkennzeichen-Erfassungseinrichtung (220) umfaßt:

eine Komparatoreinrichtung zum Vergleichen der I- und Q-Kanaldaten, die durch die ersten und zweiten Tiefpaßentzerrer (212, 213) ausgegeben werden, mit Daten mit einer speziellen Synchronisationsstruktur, die vorbestimmte Referenzwerte des Synchronisierflags sind;

eine Erfassungseinrichtung zum Erfassen spezieller Daten, die mit einem Synchronisiersignal beaufschlagt sind, und einer dazu benachbarten vorbestimmten Anzahl von Daten aus den verglichenen Werten; und

eine Zählereinrichtung zum Zählen des Synchronisierflagsignals in der Periode des Synchronisierflagsignals, zum Erfassen der Start- und Endpunkte der angeregten Zustände des Synchronisierflagsignals und zum Ausgeben des Synchronisierflagsignals.

22. Digitalsignal-Magnetaufnahme- und Wiedergabegerät gemäß einem der Ansprüche 14 bis 21, wobei die Dekodiereinrichtung (230) umfaßt:

eine Verzweigungsabschätzungswert-Berechnungsschaltung (231) zum Berechnen der evaluierten Werte der jeweiligen Verzweigungen der I- und Q-Kanaldaten, die von den ersten und zweiten Tiefpaßentzerrern (212, 213) demoduliert werden;

eine Addierer/Komparator/Selektor-Schaltung (232) zum Vergleichen der Verzweigungsabschätzungswerte gemäß den jeweiligen Zuständen eines in einem Zeitmaßstab bezeichneten Trellis-Diagramm und zum Auswählen des kleinsten abgeschätzten Wertes;

einen Zustandsspeicher (233) zum Speichern des Ausgangssignals der Addierer/Komparator/Selektor-Schaltung (232); und

ein Speicher nicht verfoigter Zugriffe (234) zum Dekodieren von Informationen aus der Addierer/Komparator/Selektor-Schaltung (232) bezüglich Zugriffspfadbeständen entsprechend jeweiliger Zustände.

23. Digitalsignal-Magnetaufnahme- und Wiedergabegerät gemäß Anspruch 22, wobei die Dekodiereinrichtung (230) in Übereinstimmung mit dem von der Synchronisierflag-Erfassungseinrichtung (220) erfaßten Synchronisierflagsignal gesteuert wird und die originalen Synchronisierdaten in der Weise dekodiert, daß der Wert des Speichers nicht verfolgter Zugriffe nicht ausgegeben wird, während das Synchronisierflagsignal in einem "angeregten" Zustand ist.

24. Digitalsignal-Magnetaufnahme- und Wiedergabegerät gemäß einem der vorhergehenden Ansprüche, wobei das Gerät einen Videorecorder umfaßt.

**Revendications**

1. Appareil d'enregistrement et de reproduction magnétiques de signaux numériques qui module un signal d'entrée d'image numérique, enregistre le signal modulé sur un support magnétique (52), lit le signal enregistré sur ce dernier et le démodule en reformant le signal original, ledit appareil étant caractérisé par:

un moyen de codage (10, 140) pour convertir un signal d'entrée d'image numérique en un signal numérique à valeurs multiples;
un moyen de modulation (20, 150) pour effectuer numériquement une modulation d'amplitude en quadrature à quatre états et une modulation de phase dudit signal numérique à valeurs multiples d'après un signal de porteuse;
un moyen de mélange de signal pilote (30, 160) pour générer un signal pilote et mélanger numériquement le signal pilote audit signal modulé;
un moyen de commande d'enregistrement (40, 170) pour former un signal d'induction magnétique approprié pour l'enregistrement sur un support d'enregistrement magnétique (52, 182) à partir du signal modulé mélangé audit signal pilote;
un moyen de commande de reproduction (60, 190) pour fournir un signal numérique dont la distorsion et la détérioration produites dans un système de transmission sont corrigées, à partir d'un signal d'induction magnétique reproduit à partir dudit support d'enregistrement magnétique (52);
un moyen de reconstitution d'onde porteuse (70, 200) pour générer un signal d'horloge ayant la fréquence du signal de porteuse par détection d'un signal pilote à partir dudit signal d'induction magnétique reproduit;
un moyen de démodulation (80, 210) pour démoduler numériquement le signal modulé fourni par ledit moyen de commande de reproduction (60) d'après le signal de porteuse reconstitué par ledit moyen de reconstitution d'onde porteuse (70, 200); et
un moyen de décodage (100, 230) pour fournir des données numériques originales par décodage de Viterbi de données codées à l'aide d'un code à convolution à partir de la sortie dudit moyen de démodulation (80, 210).

2. Appareil d'enregistrement et de reproduction magnétiques de signaux numériques selon la revendication 1, comprenant en outre un moyen de suppression du bruit (90) pour limiter des bandes et diminuer des fréquences d'horloge afin d'augmenter un rapport signal à bruit de la sortie dudit moyen de démodulation (80) fournie audit moyen de décodage (100).

3. Appareil d'enregistrement et de reproduction magnétiques de signaux numériques selon la revendication 1 ou 2, dans lequel ledit moyen de modulation (20, 150) comprend;

une première mémoire morte (241) dans laquelle est stocké un premier signal de porteuse à exprimer en composantes sinusoïdales;
une deuxième mémoire morte (242) dans laquelle est stocké un deuxième signal de porteuse à exprimer en composantes cosinusoïdales;
un premier multiplicateur (25) pour multiplier le premier signal de porteuse fourni part ladite première mémoire morte (241) par les données de voie du signal en phase (I) fournies par ledit moyen de codage (10);
un deuxième multiplicateur (26) pour multiplier le deuxième signal de porteuse fourni par ladite deuxième mémoire morte (242) par les données de voie du signal en quadrature (Q) fournies par ledit moyen de codage (10); et

un premier additionneur (27) pour additionner les sorties desdits premier et deuxième multiplicateurs (25, 26).

4. Appareil d'enregistrement et de reproduction magnétiques de signaux numériques selon la revendication 1 ou 2, dans lequel ledit moyen de modulation (20, 150) comprend:

des premier et deuxième filtres de mise en forme d'impulsions (21, 22, 151, 152) pour la mise en forme d'onde et la limitation de bande des données des voies I et Q fournies par ledit moyen de codage (10);

un premier générateur de signal de porteuse (24) comprenant une première mémoire morte (241) dans laquelle est stocké un premier signal de porteuse à exprimer en composantes sinusoïdales et une deuxième mémoire morte (242) dans laquelle est un deuxième signal de porteuse à exprimer en composantes cosinusoïdales;

un premier modulateur équilibré (25) comprenant un premier circuit à combinaison de portes ET (251) pour combiner les données de voie I fournies par ledit moyen de codage (10, 140) avec un premier signal de porteuse fourni par ladite première mémoire morte (241), un premier circuit à combinaison d'additionneurs (252) pour additionner la sortie du premier circuit à combinaison de portes ET (251), et une première mémoire tampon (253) pour stocker temporairement la sortie du premier circuit à combinaison d'additionneurs (252);

un deuxième modulateur équilibré (26) comprenant un deuxième circuit à combinaison de portes ET (261) pour combiner les données de voie Q fournies par ledit moyen de codage (10, 140) avec un deuxième signal de porteuse fourni par ladite deuxième mémoire morte (242), un deuxième circuit à combinaison d'additionneurs (262) pour additionner la sortie du deuxième circuit à combinaison de portes ET (261), et une deuxième mémoire tampon (263) pour stocker temporairement la sortie du deuxième circut à combinaison d'additionneurs (262); et

un premier additionneur (27) comprenant un troisième circuit à combinaison d'additionneurs (271) pour additionner les sorties desdites première et deuxième mémoires tampons (253, 263), à savoir le signal modulé de la voie I et le signal modulé de la voie Q, et une troisième mémoire tampon (272) pour stocker temporairement le signal à amplitude modulée en quadrature qui est ia sortie du troisième circuit à combinaison d'additionneurs (271).

5. Appareil d'enregistrement et de reproduction magnétiques de signaux numériques selon l'une quelconque des revendications précédentes, dans lequel ledit moyen de mélange de signal pilote (30, 160) comprend:

un générateur de signal pilote (31, 161) pour générer un signal pilote ayant une fréquence égale à un nombre prédéterminé de fois la fréquence du signal de porteuse; et

un deuxième additionneur (32, 162) pour additionner le signal pilote aux données modulées dudit moyen de modulation (20, 150).

6. Appareil d'enregistrement et de reproduction magnétiques de signaux numériques selon l'une quelconque des revendications précédentes, dans lequel ledit moyen de commande d'enregistrement (40) comprend:

un convertisseur numérique à analogique (N/A) (41) pour convertir la sortie dudit moyen de mélange de signal pilote (30) en un signal analogique;

un amplificateur d'enregistrement (42) pour amplifier la sortie dudit convertisseur N/A (41);

un générateur de signal de polarisation (43) pour générer un signal de polarisation; et

un troisième additionneur (44) pour additionner le signal de polarisation à la sortie dudit amplificateur d'enregistrement (42).

7. Appareil d'enregistrement et de reproduction magnétiques de signaux numériques selon l'une quelconque des revendications 1 à 5, dans lequel ledit moyen de commande d'enregistrement (170) comprend:

un convertisseur numérique à analogique (N/A) (171) pour convertir la sortie dudit moyen de mélange de signal pilote (160) en un signal analogique;

un générateur de signal de polarisation (172) pour générer un signal de polarisation utilisant une partie linéaire d'une courbe caractéristique d'aimantation considérant des caractéristiques non linéaires d'une voie magnétique; et

un troisième additionneur (173) pour additionner la sortie dudit convertisseur N/A au signal de polarisation dudit générateur de signal de polarisation.

8. Appareil d'enregistrement et de reproduction magnétiques de signaux numériques selon l'une quelconque des revendications 1 à 7, dans lequel ledit moyen de commande de reproduction (60) comprend:

un amplificateur de reproduction (61) pour amplifier un signal d'induction magnétique reproduit à partir dudit support d'enregistrement magnétique (52);
un déphaseur (62) pour déphaser la sortie dudit amplificateur de reproduction (61) pour compenser un déphasage dû aux caractéristiques différentielles d'une voie magnétique au moment de l'enregistrement;
un filtre passe-bas (63) pour filtrer le signal reproduit fourni en sortie dudit déphaseur (62);
un convertisseur analogique à numérique (A/N) (64) pour convertir la sortie dudit filtre passe-bas (63) en un signal de forme numérique; et
un égaliseur passe-bande (65) pour recevoir la sortie dudit convertisseur A/N (64) et corriger une distorsion et une détérioration du signal produites dans un système de transmission.

9. Appareil d'enregistrement et de reproduction magnétiques de signaux numériques selon l'une quelconque des revendications 1 à 7, dans lequel ledit moyen de commande de reproduction (190) comprend:

un convertisseur analogique à numérique (A/N) (191) pour convertir le signal reproduit à partir dudit support d'enregistrement magnétique (182); et
un égaliseur de reproduction (192) pour corriger à la fois la phase et l'atténuation d'amplitude d'un signal reproduit dues à une caractéristique différentielle de voie magnétique.

10. Appareil d'enregistrement et de reproduction magnétiques de signaux numériques selon l'une quelconque des revendications précédentes, dans lequel ledit moyen de reconstitution d'onde porteuse (70, 200) comprend:

un filtre passe-bande (71, 201) pour détecter un signal pilote à partir d'une sortie dudit moyen de commande de reproduction (60); et
une boucle à phase asservie (PLL) (72, 202) pour générer un signal d'horloge ayant une fréquence correspondant à celle du signal de porteuse à partir de la sortie dudit filtre passe-bande (71, 201).

11. Appareil d'enregistrement et de reproduction magnétiques de signaux numériques selon l'une quelconque des revendications précédentes, dans lequel ledit moyen de démodulation (80, 210) comprend:

une troisième mémoire morte (841) dans laquelle un premier signal de porteuse à exprimer en composantes sinusoïdales est lu d'après une horloge correspondant audit signal de porteuse reconstitué;
une quatrième mémoire morte (842) dans laquelle un deuxième signal de porteuse à exprimer en composantes cosinusoïdales est lu d'après une horloge correspondant audit signal de porteuse reconstitué;
un troisième multiplicateur (85) pour multiplier le signal modulé fourni par ledit moyen de commande de reproduction (60, 190) par le premier signal de porteuse extrait de ladite troisième mémoire morte (841);
un quatrième multiplicateur (86) pour multiplier le signal modulé fourni par ledit moyen de commande de reproduction (60, 190) par le deuxième signal de porteuse extrait de ladite quatrième mémoire morte (842); et
un quatrième additionneur pour additionner les sorties desdits troisième et quatrième multiplicateurs (85, 86).

12. Appareil d'enregistrement et de reproduction magnétiques de signaux numériques selon l'une quelconque des revendications 1 à 10, dans lequel ledit moyen de démodulation (80, 210) comprend:

un deuxième générateur de signal de porteuse (84) comprenant une troisième mémoire morte (841) dans laquelle un premier signal de porteuse à exprimer en composantes sinusoïdales est lu d'après une horloge correspondant audit signal de porteuse reconstitué et une quatrième mémoire morte (842) dans laquelle un deuxième signal de porteuse à exprimer en composantes cosinusoïdales est lu d'après une horloge correspondant audit signal de porteuse reconstitué;
un troisième modulateur équilibré (85) comprenant un quatrième circuit à combinaison de portes ET (851) pour combiner le signal modulé fourni par ledit moyen de commande de reproduction (60, 190) avec le premier signal de porteuse fourni par ladite troisième mémoire morte (841), un quatrième circuit à combinaison d'additionneurs (852) pour additionner la sortie dudit quatrième circuit à combinaison de portes ET (851) et une quatrième mémoire tampon (853) pour stocker temporairement la sortie dudit quatrième circuit à combinaison d'additionneurs (852);
un quatrième modulateur équilibré (86) comprenant un cinquième circuit à combinaison de portes ET (861) pour combiner le signal modulé fourni par ledit moyen de commande de reproduction (60, 190) avec le deuxième signal de porteuse fourni par ladite quatrième mémoire morte (842), un cinquième circuit à combinaison d'additionneurs (862) pour additionner la sortie dudit cinquième circuit à combinaison de portes ET (861) et une cinquième mémoire tampon (863) pour stocker temporairement la sortie dudit cinquième circuit à combinaison d'additionneurs (862); et

des premier et deuxième filtres adaptés (82, 83) pour limiter les bandes de sortie desdits troisième et quatrième modulateurs équilibrés (85, 86), ou des premier et deuxième égaliseurs passe-bas (212, 213) pour corriger les amplitudes et phases des bandes de sortie desdits troisième et quatrième modulateurs équilibrés (85, 86).

13. Appareil d'enregistrement et de reproduction magnétiques de signaux numériques selon les revendications 2 et 12, dans lequel ledit moyen de suppression du bruit (90) comprend:

des premier et deuxième réducteurs (91, 92) pour diminuer une fréquence d'horloge afin d'améliorer un rapport signal à bruit (S/B) de la sortie desdits premier et deuxième filtres adaptés (82, 83); des premier et deuxième égaliseurs de bande de base (93, 94) pour compenser les signaux de sortie desdits premier et deuxième réducteurs (91, 92); et des troisième et quatrième réducteurs (95, 96) pour réduire à nouveau les sorties desdits premier et deuxième égaliseurs de bande de base (93, 94) pour diminuer la fréquence d'horloge.

14. Appareil d'enregistrement et de reproduction magnétiques de signaux numériques selon l'une quelconque des revendications précédentes, comprenant:

un moyen de conversion numérique à analogique (N/A) (41) pour convertir le signal modulé avec lequel ledit signal pilote est mélangé en un signal analogique; ledit moyen de commande d'enregistrement (40) comprenant un moyen de génération de signal de polarisation pour générer un signal de polarisation ayant une fréquence supérieure à un nombre prédéterminé de fois la fréquence d'un signal de porteuse à enregistrer en utilisant une partie linéaire d'une courbe caractéristique d'aimantation d'une voie magnétique, combiner le signal de polarisation généré avec la sortie dudit moyen de conversion N/A et transmettre le résultat audit support d'enregistrement magnétique (52); et ledit moyen de commande de reproduction (60) comprenant un moyen de conversion analogique à numérique (A/N) (64) pour fournir un signal analogique d'induction magnétique, reproduit à partir dudit support d'enregistrement magnétique (52) sous la forme d'un signal numérique, après avoir corrigé la distorsion et la détérioration du signal produites dans le système de transmission.

15. Appareil d'enregistrement et de reproduction magnétiques de signaux numériques selon l'une quelconque des revendications précédentes, comprenant:

un moyen d'insertion de signal de synchronisation (110) pour insérer un signal de synchronisation dans lesdites données numériques d'entrée fournies audit moyen de codage (140) et fournir un signal indicateur de synchronisation; un moyen de commande de signal de synchronisation (120) pour commander le codage dudit moyen de codage (140) par réception dudit signal indicateur de synchronisation; un moyen de détection d'indicateur de synchronisation (220) pour reconstituer un signal indicateur de synchronisation à partir dudit signal démodulé fourni par ledit moyen de démodulation (210); et ledit moyen de décodage (230) fournissant des données numériques originales par décodage de Viterbi de données codées à l'aide d'un code à convolution à partir de la sortie dudit moyen de démodulation (210) d'après ledit signal indicateur de synchronisation.

16. Appareil d'enregistrement et de reproduction magnétiques de signaux numériques selon la revendication 13, dans lequel ledit moyen de codage (140) comprend:

un tampon (141) pour stocker temporairement une partie des bits de données fournis par ledit moyen d'insertion de signal de synchronisation (110); un codeur à convolution (142) dans lequel un gain de codage et un taux d'erreurs sur des bits sont considérés à partir des données fournies par ledit moyen d'insertion de signal de synchronisation (110); et un dispositif de mise en correspondance (143) qui fixe la relation entre des points de signal à travers ledit codeur à convolution (142) pour que le gain de codage devienne important au moment du décodage.

17. Appareil d'enregistrement et de reproduction magnétiques de signaux numériques selon la revendication 16, comprenant en outre un moyen de sélection (130) pour fournir sélectivement certains des bits des signaux fournis par ledit moyen d'insertion de signal de synchronisation (110) audit dispositif de mise en correspondance (143) et le reste des bits audit codeur à convolution (142) de façon à être décalés en parallèle.

18. Appareil d'enregistrement et de reproduction magnétiques de signaux numériques selon la revendication 16 ou 17, dans lequel ledit dispositif de mise en correspondance (143) fait correspondre le signal de synchronisation fourni par ledit moyen d'insertion de signal de synchronisation (110) à l'origine sur un schéma de constellation de signaux pendant une période où ledit signal indicateur de synchronisation est au niveau "excité".

19. Appareil d'enregistrement et de reproduction magnétiques de signaux numériques selon la revendication 14, 15 ou 16, dans lequel ledit dispositif de mise en correspondance (143) est constitué par des mémoires mortes et, dans la constellation de signaux, une partie décalée parallèle parmi des signaux dudit codeur à convolution (142) est répartie dans un groupe le plus éloigné et un signal décalé dans le même état est réparti dans un groupe éloigné.

20. Appareil d'enregistrement et de reproduction magnétiques de signaux numériques selon la revendication 17 ou l'une des revendications 18 et 19 lorsqu'elles en dépendent, dans lequel ledit moyen de commande de signal de synchronisation (120) comprend:

un diviseur de fréquence (121) pour diviser la fréquence d'une horloge de système par un nombre prédéterminé et entrer l'horloge à fréquence divisée en tant que signal d'horloge du dispositif de mise en correspondance (143);
un premier élément à retard (122) pour diviser de nouveau la fréquence de la sortie dudit diviseur de fréquence (121) et fournir un signal d'horloge dudit moyen de sélection (130);
un deuxième élément à retard (125) pour fournir le signal d'horloge dudit codeur à convolution (142) par réception de la sortie dudit diviseur de fréquence (121) en entrée et réception dudit signal indicateur de synchronisation en tant que signal de validation;
un troisième élément à retard (126) pour retarder ledit signal indicateur de synchronisation d'une période d'horloge; et
un élément logique (127) pour multiplier logiquement ledit signal indicateur de synchronisation par la sortie dudit troisième élément à retard (126) et fournir le résultat à une borne de validation dudit dispositif de mise en correspondance (143).

21. Appareil d'enregistrement et de reproduction magnétiques de signaux numériques selon l'une quelconque des revendications 15 à 20, dans lequel ledit moyen de détection d'indicateur de synchronisation (220) comprend:

un moyen de comparaison pour comparer les données des canaux I et Q fournies par lesdits premier et deuxième égaliseurs passe-bas (212, 213) à des données à configuration de synchronisation spécifique qui sont des valeurs de référence prédéterminées d'indicateur de synchronisation;
un moyen de détection pour détecter des données spécifiques sur lesquelles un signal de synchronisation est chargé et un nombre prédéterminé de données qui leurs sont adjacentes à partir desdites valeurs comparées; et
un moyen de comptage pour compter le signal indicateur de synchronisation sur la période du signal indicateur de synchronisation, détecter les points de départ et de fin des états excités du signal indicateur de synchronisation et fournir le signal indicateur de synchronisation.

22. Appareil d'enregistrement et de reproduction magnétiques de signaux numériques selon l'une quelconque des revendications 14 à 21, dans lequel ledit moyen de décodage (230) comprend:

un circuit de calcul de valeur évaluée par branche (231) pour calculer les valeurs évaluées, pour les branches respectives, des données des voies I et Q démodulées provenant desdits premier et deuxième égaliseurs passe-bas (212, 213);
un circuit additionneur/comparateur/sélecteur (232) pour comparer les valeurs évaluées par branches d'après des états respectifs d'un diagramme de Trellis indiqués dans une échelle de temps et pour sélectionner la plus petite valeur évaluée;
une mémoire d'état (233) pour stocker la sortie dudit circuit additionneur/comparateur/sélecteur (232); et
une mémoire de chemin sans trace (234) pour décoder des informations sur des chemins de survie d'après des états respectifs dudit circuit additionneur/comparateur/sélecteur (232).

**23.** Appareil d'enregistrement et de reproduction magnétiques de signaux numériques selon la revendication 22, dans lequel ledit moyen de décodage (230) est commandé d'après le signal indicateur de synchronisation détecté par ledit moyen de détection d'indicateur de synchronisation (220) et décode les données de synchronisation d'origine d'une manière telle que la valeur de ladite mémoire de chemin sans trace n'est pas extraite lorsque le signal indicateur de synchronisation est à un niveau "excité".

**24.** Appareil d'enregistrement et de reproduction de signaux numériques selon l'une quelconque des revendications précédentes, dans lequel ledit appareil comprend un enregistreur vidéo.

**FIG. 1**

# FIG. 2

I-CHANNEL INPUT — $\frac{m+k}{2}$ blt — 24

CLOCK FREQUENCY → CARRIER FREQUENCY GENERATOR

Q-CHANNEL INPUT — $\frac{m+k}{2}$ blt

I-CHANNEL ⊗ 25 — Pblt

Iblt SIN 27

Iblt COS 26 ⊗ gblt

Q-CHANNEL

Σ — rblt — MODULATED DIGITAL SIGNAL OUTPUT

EP 0 614 184 B1

EP 0 614 184 B1

**FIG. 3A**

**FIG. 3B**

$D_1(\frac{m+k}{2}$ bit) $\quad D_2(\frac{m+k}{2}$ bit)$

**FIG. 3C**

$C_1 \quad C_2 \quad C_3 \quad C_4 \quad C_5 \quad C_6 \quad C_7 \quad C_8$

**FIG. 3D**

$D_1 \times C_1 \quad D_1 \times C_2 \quad D_1 \times C_3 \quad D_1 \times C_4 \quad D_1 \times C_5 \quad D_1 \times C_6 \quad D_1 \times C_7$

# FIG. 4

# FIG.5

EP 0 614 184 B1

## FIG. 6A

## FIG. 6B

| ADDRESS | AMPLITUDE $y=\sin(2^{n-2}/90)\cdot m$ |
|---|---|
| 0 | 0 |
| 1 | y |
| 2 | 2y |
| . | . |
| . | . |
| . | . |
| $2^n-1$ | $-y$ |

## FIG. 6C

| SELECTED ADDRESS AMONG $2^n-1$ | AMPLITUDE | ACTUAL ADDRESS |
|---|---|---|
| 209 | $m-46y$ | 0 |
| 420 | $+92y$ | 1 |
| 631 | $-m+136y$ | 2 |
| 842 | . | . |
| 29 | . | . |
| 240 | . | . |
| . | . | . |
| . | . | . |
| . | . | . |

## FIG. 7A

## FIG. 7B

| ADDRESS | AMPLITUDE |
|---------|-----------|
| 0 | $m-1$ |
| 1 | $m-1-y$ |
| 2 | $m-1-2y$ |
| . | . |
| . | . |
| . | . |
| . | . |
| . | . |
| $2^n-1$ | $m-1-y$ |

## FIG. 7C

| SELECTED ADDRESS AMONG $2^n-1$ | AMPLITUDE | ACTUAL ADDRESS |
|---------|-----------|----------------|
| 209 | $m+46y$ | 0 |
| 420 | $-m+92y$ | 1 |
| 631 | $-136y$ | 2 |
| 842 | . | . |
| 29 | . | . |
| 240 | . | . |
| . | . | . |
| . | . | . |
| . | . | . |
| . | . | . |
| . | . | . |

40

# FIG. 8

MODULATED DIGITAL SIGNAL INPUT

85

SIN

CARRIER FREQUENCY GENERATOR — 84

COS

86

I-CHANNEL DATA

CLOCK FREQUENCY

Q-CHANNEL DATA

EP 0 614 184 B1

# FIG. 9

FOURTH AND GATE COMBINATION CIRCUIT — 851
FOURTH ADDER COMBINATION CIRCUIT — 852
FOURTH LATCH — 853
I—CHANNEL DATA
85

SINE TABLE — 841
COSINE TABLE — 842
84

MODULATED DIGITAL SIGNAL INPUT
CLOCK

FIFTH AND GATE COMBINATION CIRCUIT — 861
FIFTH ADDER COMBINATION CIRCUIT — 862
FIFTH LATCH — 863
Q—CHANNEL DATA
86

EP 0 614 184 B1

FIG. 10

FIG. 11A

DATA | DATA

FIG. 11B

176 CLOCK

FIG. 11C

Sync | DATA | Sync | DATA

4 | 176

180 CLOCK

FIG. 11D

FIG. 11E

FIG. 11F

# FIG. 12

# FIG. 13

SYNCHRONIZING FLAG

SYSTEM CLOCK

121 FREQUENCY DIVIDER

122

123

124

125

126

127

INPUT TO MODULATOR & PILOT SIGNAL GENERATOR

MULTIPLEXER CLOCK

INPUT TO MAPPER

ENCODER CLOCK

INPUT TO S TERMIAL OF MAPPER

EP 0 614 184 B1

FIG. 14A

FIG. 14B

FIG. 14C

FIG. 14D

FIG. 14E

# FIG. 15

EP 0 614 184 B1

# FIG. 16

# FIG. 17

$$[C_0, C_5, C_6, C_3]$$

$$[C_6, C_3, C_0, C_5]$$

$$[C_2, C_7, C_4, C_1]$$

$$[C_4, C_1, C_2, C_7]$$

$$[C_5, C_0, C_3, C_6]$$

$$[C_3, C_6, C_5, C_0]$$

$$[C_7, C_2, C_1, C_4]$$

$$[C_1, C_4, C_7, C_2]$$

EP 0 614 184 B1

# FIG. 18

ADDRESS ⟶⟶⟶⟶ ROM ⟶⟶⟶⟶ DATA

INPUT ⟶ ⟶ OUTPUT

# FIG. 19

SHIFT REGISTER

FIRST COMPARATOR

A=B

A1

223

SYNCHRONIZING FLAG REFERENCE VALUE

A2

OR1

NOR1

LOAD

COUNTER

A4

OR2

D Q

CLK Q̄

OUTPUT

225

A3

SECOND COMPARATOR

A=B

A5

CLOCK

CLK

224